# EUROPEAN PATENT SPECIFICATION

(11) **EP 3 718 611 B1**
(45) Date of publication and mention of the grant of the patent: **22.02.2023**
(21) Application number: 20173606.3
(22) Date of filing: 24.12.2014
(51) Int. Cl.: A63B 41/08, A63B 45/00, A63B 41/02

(54) **SPORT BALLS HAVING SEAM REINFORCING STRIPS**
SPORTBÄLLE MIT NAHTVERSTÄRKENDEN STREIFEN
BALLONS DE SPORT DOTÉS DE BANDES DE RENFORCEMENT DE COUTURE

(30) Priority: 30.12.2013 US 201314143364
(43) Date of publication of application: 07.10.2020
(62) Divisional of application: 14825069.9
(73) Proprietor: NIKE Innovate C.V., Beaverton, OR 97005-6453 (US)
(72) Inventor: BERGGREN, Scott R., Beaverton, OR 97005-6453 (US); HAMMOND, Allison Campbell, Beaverton, OR 97005-6453 (US); WHITE, Vincent F., Beaverton, OR 97005-6453 (US); JOHNSON, Scott W., Beaverton, OR 97005-6453 (US); CHAVEZ, Eleazar C., Beaverton, OR 97005-6453 (US); COHEN, Tal, Beaverton, OR 97005-6453 (US); RAYNAK, Geoffrey C., Beaverton, OR 97005-6453 (US)
(74) Representative: Müller-Boré & Partner Patentanwälte PartG mbB

(56) References cited:
- JP-A- H10 337 341
- US-A1- 2009 325 747
- US-A1- 2012 316 015
- US-A1- 2013 005 520

## Description

### BACKGROUND

A variety of inflatable sport balls, such as a soccer ball, conventionally exhibit a layered structure that includes a casing, an intermediate layer, and a bladder. The casing forms an exterior portion of the sport ball and is generally formed from a plurality of durable and wear-resistant panels joined together along abutting edges (e.g., with stitching or adhesives). Although panel configurations may vary significantly, the casing of a traditional soccer ball includes thirty-two panels, twelve of which have a pentagonal shape and twenty of which have a hexagonal shape.

The intermediate layer forms a middle portion of the sport ball and is positioned between the casing and the bladder. Among other purposes, the intermediate layer may provide a softened feel to the sport ball, impart energy return, and restrict expansion of the bladder. In some configurations, the intermediate layer or portions of the intermediate layer may be bonded, joined, or otherwise incorporated into the casing as a backing material.

The bladder, which has an inflatable configuration, is located within the intermediate layer to provide an interior portion of the sport ball. In order to facilitate inflation (i.e., with pressurized air), the bladder generally includes a valved opening that extends through each of the intermediate layer and casing, thereby being accessible from an exterior of the sport ball.

In order to reduce weight and/or manufacturing costs, alternative methods and materials for joining the panels of a sport ball casing. In order to facilitate implementation of such alternative ball constructions, it may be desirable to provide reinforcement for the seams.

US 2013/0005520 A1 describes a sport ball having a plurality of panels that are joined at seams to form a casing. The panels may include a thermoplastic polymer material applied to an interior side of the panels, and the thermoplastic polymer material may be heat-activated to extend across the seams. The ball may further include a bladder within the casing and an intermediate layer located between the casing and the bladder. The thermoplastic polymer material may also be heat-activated to bond with the intermediate layer or casing.

US 2009/0325747 A1 describes a sportsball including a ball carcass, an inflatable ball body received in a ball cavity of the ball carcass, and a stitchless seam arrangement which includes an elongated adhesive layer having a contour matching with a contour of an opening of the ball carcass, wherein after the ball body is disposed in the ball carcass, edge portions of the opening are adhered on an outer surface of the ball body via the adhesive layer, such that the opening is sealed to close the ball cavity for enclosing the ball body in the ball cavity of the ball carcass in a stitchless seam manner.

US 2012/0316015 A1 describes a laminar ball including a spherical rubber core member, a reinforcing thread layer formed of a mixture of threads and latex and surrounding the spherical rubber core member to have the latex be bonded with the spherical rubber core member, an outer rubber layer surrounding the reinforcing thread layer and bonded with the latex and having intersected reinforcing ribs, a rubber surface layer bonded to the outer rubber layer, and a plurality of grooves defined in the rubber surface layer corresponding to the reinforcing ribs.

### SUMMARY

In one aspect, the present disclosure is directed to a sport ball according to claim 1. In another aspect, the present disclosure is directed a method of manufacturing a sport ball according to claim 6.

The advantages and features of novelty characterizing aspects of the invention are pointed out with particularity in the appended claims. To gain an improved understanding of the advantages and features of novelty, however, reference may be made to the following descriptive matter and accompanying figures that describe and illustrate various configurations and concepts related to the invention.

### FIGURE DESCRIPTIONS

The foregoing Summary and the following Detailed Description will be better understood when read in conjunction with the accompanying figures.
Figure 1 is a perspective view of a sport ball.
Figure 2 is another perspective view of the sport ball.
Figure 3 is a cross-sectional view of a portion of the sport ball, as defined by section line 3-3 in Figure 2.
Figure 4 is a top plan view of a panel of the sport ball.
Figure 5 is a perspective view of two joined panels.
Figure 6 is a cross-sectional view of the joined panels, as defined by section line 6-6 in Figure 5.
Figure 7 is a perspective view of a welding tool utilized in joining the panels.
Figure 8 is a cross-sectional view of the welding tool, as defined by section line 8-8 in Figure 7.
Figures 9A-9E are schematic cross-sectional views depicting steps of welding the panels together in a manufacturing process for the sport ball.
Figure 10 is a cross-sectional view that corresponds with Figure 8 and depicts another configuration of the welding tool.
Figures 11A-11F are perspective views depicting further steps in the manufacturing process for the sport ball.
Figure 12 is a top plan view of three panels of the sport ball.
Figures 13A and 13B are cross-sectional views of the panels, as defined by section lines 13A-13A and 13B-13B in Figure 12.
Figures 14A-14E are cross-sectional views depicting additional steps in the manufacturing process for the sport ball, as defined by a section line 14-14 in Figure 11E.
Figures 15A-15F are cross-sectional views corresponding with Figure 13A and depicting further configurations of the panels.
Figures 16A-16F are cross-sectional respectively depicting the panels from Figures 15A-15E as being joined.
Figure 17 is a perspective view of another configuration of the sport ball.
Figure 18 is a cross-sectional view of a portion of the sport ball depicted in Figure 17, as defined by section line 18-18 in Figure 17.
Figures 19A-19C are cross-sectional views that correspond with Figure 18 and depict further configurations.
Figure 20 is a perspective view of yet another configuration of the sport ball.
Figure 21 is an exploded view of another sport ball embodiment including a plurality of reinforcing strips applied to an internal surface of the casing.
Figure 22 shows a sport ball with the casing inside out during assembly.
Figure 23 illustrates a cross sectional view taken at section line 23-23 in Figure 22.
Figure 24 illustrates a cross sectional view of an embodiment similar to Figure 23.
Figure 25 illustrates the insertion of a bladder and intermediate layer into a sport ball after having been turned right side out.
Figure 26 illustrates closure of the final seam of the sport ball after inserting the bladder and intermediate layer.
Figure 27 illustrates an apparatus for affixing reinforcing strips to the internal surface of the sport ball casing.
Figure 28 illustrates the apparatus of Figure 27 in a closed condition.
Figure 29 illustrates a sport ball being inserted into the apparatus of Figure 27.
Figure 30 illustrates a cross-sectional view, taken at section line 30-30 in Figure 29, of the layers of a sport ball prior to use of the apparatus in Figure 27 to affix the reinforcing layer.
Figure 31 illustrates a cross-sectional view of the layers of the sport ball of Figure 30 after application of heat and pressure using the apparatus of Figure 27.
Figure 32 illustrates a completed ball after affixing the reinforcing strips to the internal side of the casing, where the casing is shown in phantom.
Figure 33 illustrates a sport ball embodiment including reinforcing strips affixed to seams of the casing, wherein some of the seams include stitching.
Figure 34 is a cross-sectional view of the ball of Figure 33.
Figure 35 is a cross-sectional view of another sport ball embodiment.
Figure 36 is a cross-sectional view of another sport ball embodiment.
Figure 37 illustrates a method of applying reinforcing strips to a sport ball casing.
Figure 38 illustrates a sport ball casing being collapsed to form a bowl-shaped configuration.
Figure 39 illustrates the sport ball casing of Figure 38 fully collapsed into a bowl-shaped configuration.
Figure 40 illustrates a collapsed sport ball casing prepared to insert into a reinforcing strip applying apparatus, the sport ball casing shown in a cross-sectional view taken at section line 40-40 in Figure 39.
Figure 41 illustrates the sport ball casing of Figure 39 inserted into the reinforcing strip applying apparatus and a length of reinforcing strip material being applied to the sport ball casing.
Figure 42 illustrates the sport ball casing of Figure 39 further inserted into the reinforcing strip applying apparatus and the reinforcing strip material cut into a reinforcing strip.

### DETAILED DESCRIPTION

The following discussion and accompanying figures disclose various sport ball configurations and methods relating to manufacturing of the sport balls. Although the sport ball is discussed and depicted in relation to a soccer ball, concepts associated with the configurations and methods may be applied to various types of inflatable sport balls. In addition to soccer balls, therefore, concepts discussed herein may be incorporated into basketballs, footballs (for either American football or rugby), volleyballs, and water polo balls, for example. A variety of non-inflatable sport balls, such as baseballs and softballs, may also incorporate concepts discussed herein.

### General Sport Ball Configuration

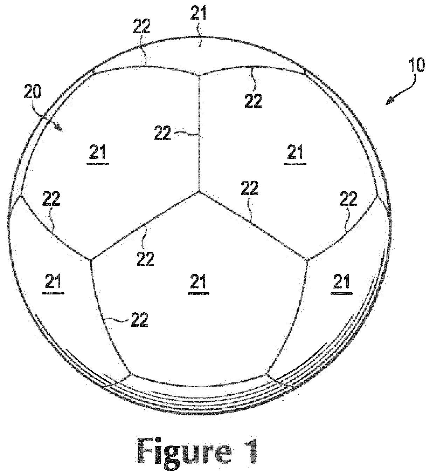

A sport ball 10 having the general configuration of a soccer ball is depicted in Figures 1-3. Sport ball 10 exhibits a layered structure having (a) a casing 20 that forms an exterior portion of sport ball 10, (b) an intermediate layer 30 located within casing 20, and (c) an inflatable bladder 40 that forms an interior portion of sport ball 10. Upon pressurization, bladder 40 induces sport ball 10 to take on a substantially spherical shape. More particularly, pressure within bladder 40 causes bladder 40 to place an outward force upon intermediate layer 30. In turn, intermediate layer 30 places an outward force upon casing 20. In order to limit expansion of bladder 40 and also limit tension in casing 20, a portion of intermediate layer 30 may have a limited degree of stretch. In other words, bladder 40 places an outward force upon intermediate layer 30, but the stretch characteristics of intermediate layer 30 effectively prevent the outward force from inducing significant tension in casing 20. Accordingly, intermediate layer 30 restrains pressure from bladder 40, while permitting outward forces to induce a spherical shape in casing 20, thereby imparting a spherical shape to sport ball 10.

Casing 20 is formed from various panels 21 that are joined together along abutting sides or edges to form a plurality of seams 22. Although panels 21 are depicted as having the shapes of twelve equilateral pentagons, panels 21 may have non-equilateral shapes, concave or convex edges, or a variety of other shapes (e.g., triangular, square, rectangular, hexagonal, trapezoidal, round, oval, non-geometrical) that combine in a tessellation-type manner to form casing 20. In some configurations, sport ball 10 may have twelve pentagonal panels 21 and twenty hexagonal panels 21 to impart the general configuration of a traditional soccer ball. Selected panels 21 may also be formed of unitary (i.e., one piece) construction with adjacent panels 21 to form bridged panels that reduce the number of seams 22. Accordingly, the configuration of casing 20 may vary significantly.

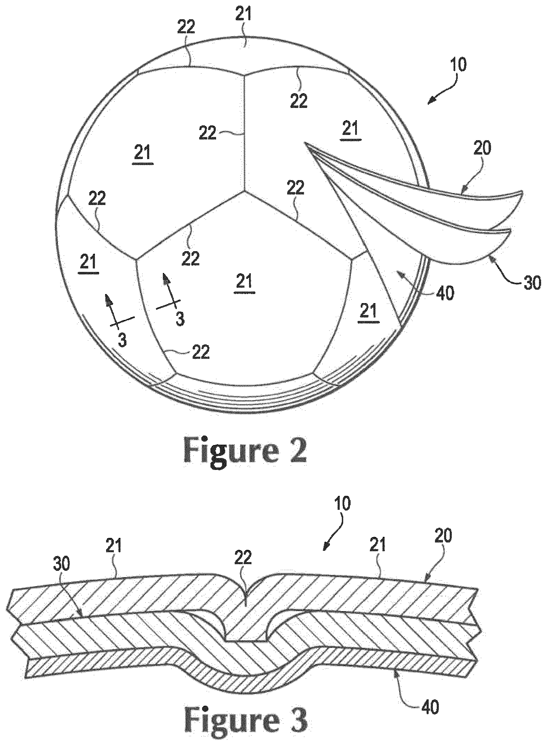

A distinction between conventional casings and casing 20 relates to the manner in which panels 21 are joined to form seams 22. The panels of conventional sport balls may be joined with stitching (e.g., hand or machine stitching). In contrast, a welding process is utilized in the manufacture of sport ball 10 to join panels 21 and form seams 22. More particularly, panels 21 are at least partially formed from a polymer material, which may be a thermoplastic polymer material, and edges of panels 21 may be heated and bonded to each other to form seams 22. An example of the configuration of seams 22 is depicted in the cross-section of Figure 3, wherein the welding process has effectively secured, bonded, or otherwise joined two of panels 21 to each other by combining or intermingling the polymer materials from each of panels 21 to form a thermal bond. In other configurations, some of panels 21 may be joined through stitching, or various seams 22 may be supplemented with stitching.

One advantage of utilizing a welding process to form seams 22 relates to the overall mass of sport ball 10. Whereas approximately ten to fifteen percent of the mass of a conventional sport ball may be from the seams between panels, welding panels 21 may reduce the mass at seams 22. By eliminating stitched seams in casing 20, the mass that would otherwise be imparted by the stitched seams may be utilized for other structural elements that enhance the performance properties (e.g., energy return, sphericity, mass distribution, durability, aerodynamics) of sport ball 10. Another advantage relates to manufacturing efficiency. Stitching each of the seams of a conventional sport ball is a relatively time-consuming process, particularly when hand stitching is utilized. By welding panels 21 together at seams 22, the time necessary for forming casing 20 may be deceased, thereby increasing the overall manufacturing efficiency.

Intermediate layer 30 is positioned between casing 20 and bladder 40 and may be formed to include one or more of a compressible foam layer that provides a softened feel to the sport ball, a rubber layer that imparts energy return, and a restriction layer to restrict expansion of bladder 40. The overall structure of intermediate layer 30 may vary significantly. As an example, the restriction layer may be formed from (a) a thread, yarn, or filament that is repeatedly wound around bladder 40 in various directions to form a mesh that covers substantially all of bladder 40, (b) a plurality of generally flat or planar textile elements stitched together to form a structure that extends around bladder 40, or (c) a plurality of generally flat or planar textile strips that are impregnated with latex and placed in an overlapping configuration around bladder 40 The restriction layer may also be a substantially seamless spherically-shaped textile, as disclosed in White et al., U.S. Patent No. 8,192,311, issued June 5, 2012, the entire disclosure of which is incorporated herein by reference. In some configurations of sport ball 10, intermediate layer 30 or portions of intermediate layer 30 may also be bonded, joined, or otherwise incorporated into casing 20 as a backing material, or intermediate layer 30 may be absent from sport ball 10. Accordingly, the structure of intermediate layer 30 may vary significantly to include a variety of configurations and materials.

Bladder 40 has an inflatable configuration and is located within intermediate layer 30 to provide an inner portion of sport ball 10. When inflated, bladder 40 exhibits a rounded or generally spherical shape. In order to facilitate inflation, bladder 40 may include a valved opening (not depicted) that extends through intermediate layer 30 and casing 20, thereby being accessible from an exterior of sport ball 10, or bladder 40 may have a valveless structure that is semi-permanently inflated. Bladder 40 may be formed from a rubber or carbon latex material that substantially prevents air or other fluids within bladder 40 from diffusing to the exterior of sport ball 10. In addition to rubber and carbon latex, a variety of other elastomeric or otherwise stretchable materials may be utilized for bladder 40. In some configurations, bladder 40 may also have a structure formed from a plurality of joined panels, as disclosed in Rapaport et al., U.S. Patent No. 8,210,973, issued July 3, 2012, the entire disclosure of which is incorporated herein by reference.

### First Manufacturing Process

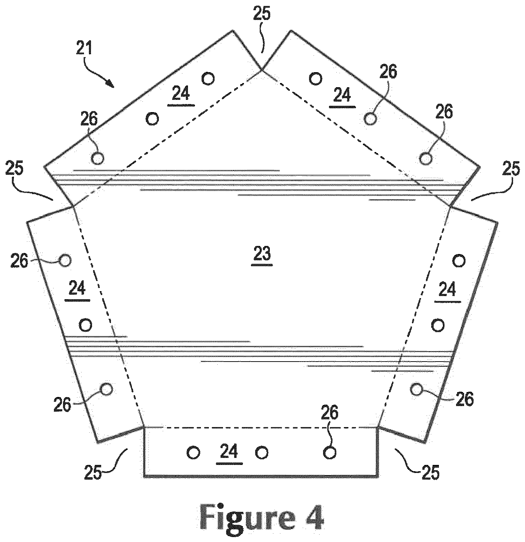

The panels of conventional sport balls, as discussed above, may be joined with stitching (e.g., hand or machine stitching). Panels 21 are, however, at least partially formed from a polymer material, which may be a thermoplastic polymer material, that can be joined through the welding process. Referring to Figure 4, one of panels 21 prior to incorporation into sport ball 10 is depicted as having a panel area 23 and five flange areas 24. Whereas panel area 23 generally forms a central portion of panel 21, flange areas 24 generally form edge portions of panel 21 and extend around panel area 23. For purposes of reference, dashed lines are depicted as extending between panel area 23 and the various flange areas 24. Panel 21 has a pentagonal shape and each of flange areas 24 correspond with one side region of the pentagonal shape. In further configurations where a panel has a different shape, the number of flange areas may change to correspond with the number of sides of the shape. Panel 21 defines five notches 25 that extend inward from vertices of the pentagonal shape and effectively separate the various flange areas 24 from each other. Notches 25 may, therefore, permit flange areas 24 to flex or otherwise move independent of each other, although flange areas 24 remain connected to panel area 23. Additionally, each flange area 24 defines various registration apertures 26 that form holes extending through panel 21.

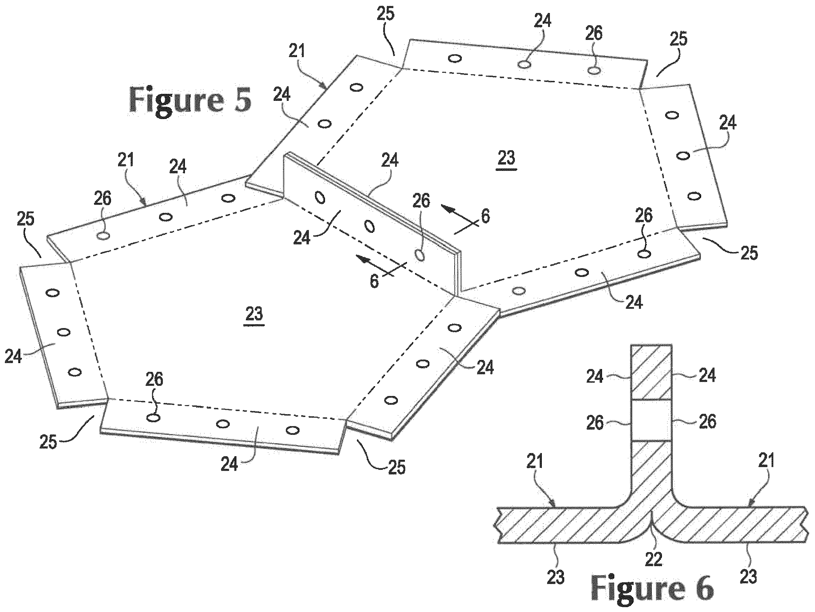

Panel areas 23 of the various panels 21 form a majority, or the entirety, of the portion of casing 20 that is visible on the exterior of sport ball 10. Flange areas 24, however, form portions of panels 21 that are bonded together to join panels 21 to each other. Referring to Figures 5 and 6, an example of the manner in which two panels 21 are joined to each other is depicted. Although panel areas 23 are generally co-planar with each other, the joined flange areas 24 bend upward and are joined along abutting surfaces. Additionally, registration apertures 26 from each of the joined flange areas 24 are aligned. By aligning registration apertures 26 prior to bonding (i.e., through welding), flange areas 24 are properly positioned relative to each other. As discussed in greater detail below, portions of the joined flange areas 24 may be trimmed during the manufacturing process for casing 20. Note that the upwardly-facing surfaces in Figures 5 and 6 are located on an interior of sport ball 10 once manufacturing is completed, and downwardly-facing surfaces form an exterior surface of sport ball 10.

Panels 21 are discussed above as including a polymer material, which may be utilized to secure panels 21 to each other. Examples of suitable polymer materials for panels 21 include thermoplastic and/or thermoset polyurethane, polyamide, polyester, polypropylene, and polyolefin. In some configurations, panels 21 may incorporate filaments or fibers that reinforce or strengthen casing 20. In further configurations, panels 21 may have a layered structure that includes an outer layer of the polymer material and an inner layer formed from a textile, polymer foam, or other material that is bonded with the polymer material. Panels 21 may also incorporate multiple joined layers formed from a variety of materials.

When exposed to sufficient heat, the polymer materials within panels 21 transition from a solid state to either a softened state or a liquid state, particularly when a thermoplastic polymer material is utilized. When sufficiently cooled, the polymer materials then transition back from the softened state or the liquid state to the solid state. Based upon these properties of polymer materials, welding processes may be utilized to form a weld that joins portions of panels 21 (i.e., flange areas 24) to each other. As utilized herein, the term "welding" or variants thereof is defined as a securing technique between two elements that involves a softening or melting of a polymer material within at least one of the elements such that the materials of the elements are secured to each other when cooled. Similarly, the term "weld" or variants thereof is defined as the thermal bond, link, or structure that joins two elements through a process that involves a softening or melting of a polymer material within at least one of the elements such that the materials of the elements are secured to each other when cooled. As examples, welding may involve (a) the melting or softening of two panels 21 that include polymer materials such that the polymer materials from each panel 21 intermingle with each other (e.g., diffuse across a boundary layer between the polymer materials) and are secured together when cooled and (b) the melting or softening a polymer material in a first panel 21 such that the polymer material extends into or infiltrates the structure of a second panel 21 (e.g., infiltrates crevices or cavities formed in the second panel 21 or extends around or bonds with filaments or fibers in the second panel 21) to secure the panels 21 together when cooled. Welding may occur when only one panel 21 includes a polymer material or when both panels 21 include polymer materials. Additionally, welding does not generally involve the use of stitching or adhesives, but involves directly bonding panels 21 to each other with heat. In some situations, however, stitching or adhesives may be utilized to supplement the weld (thermal bond) or the joining of panels 21 through welding.

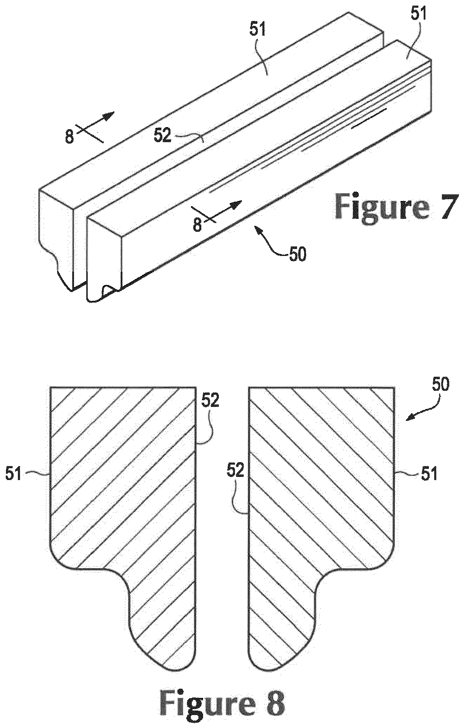

A variety of techniques may be utilized to weld flange areas 24 to each other, including conduction heating, radiant heating, radio frequency heating, ultrasonic heating, and laser heating. An example of a welding die 50 that may be utilized to form seams 22 by bonding two flange areas 24 is depicted in Figures 7 and 8. Welding die 50 includes two portions 51 that generally correspond in length with a length of one of the sides of panels 21. That is, the length of welding die 50 is generally as long as or longer than the lengths of flange areas 24. Each portion 51 also defines a facing surface 52 that faces the other portion 51. That is, facing surfaces 52 face each other. If utilized for purposes of conduction heating, for example, portions 51 may each include internal heating elements or conduits that channel a heated liquid in order to sufficiently raise the temperature of welding die 50 to form a weld between flange areas 24. If utilized for purposes of radio frequency heating, one or both of portions 51 may emit radio frequency energy that heats the particular polymer material within panels 21. In addition to welding die 50, a variety of other apparatuses that may effectively form a weld between panels 21 may be utilized.

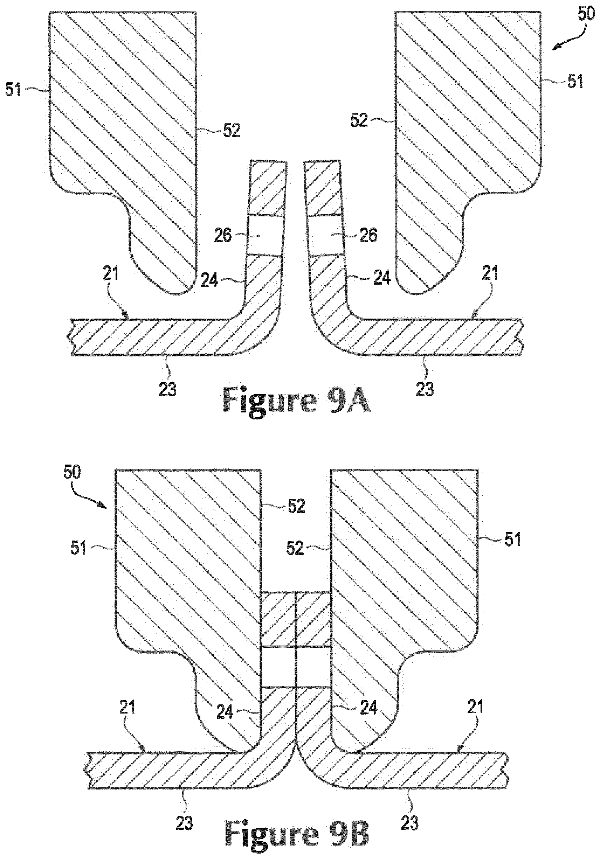

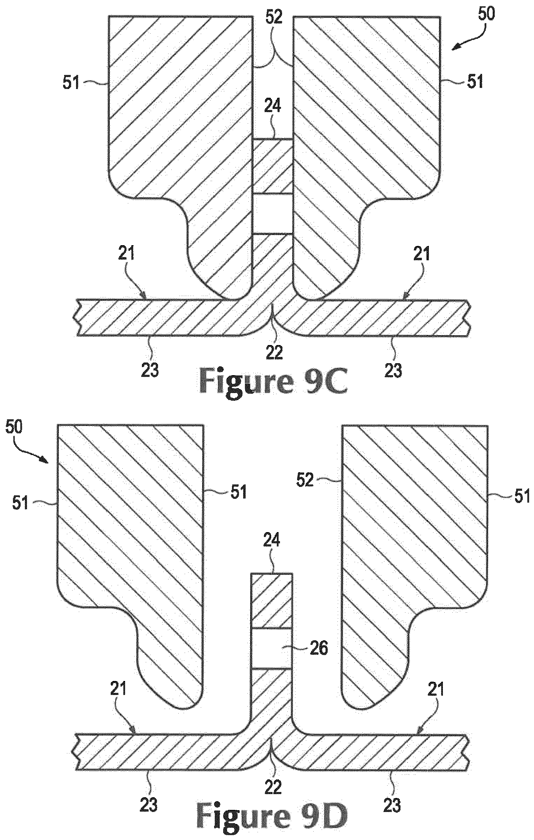

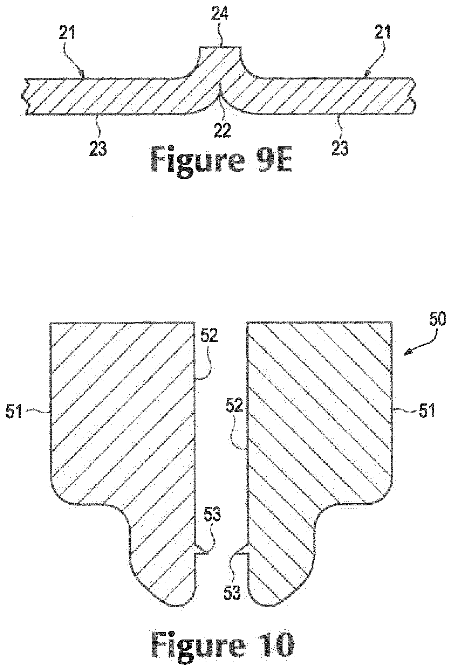

A general process for joining panels 21 with welding die 50 will now be discussed with reference to Figures 9A-9E. Initially, adjacent flange areas 24 from two panels 21 are located such that (a) surfaces of the flange areas 24 face each other and (b) registration apertures 26 are generally aligned, as depicted in Figure 9A. Portions 51 of welding die 50 are also located on opposite sides of the abutting flange areas 24. Portions 51 then compress flange areas 24 together between facing surfaces 52 to cause surfaces of flange areas 24 to contact each other, as depicted in Figure 9B. By heating flange areas 24 with welding die 50, the polymer materials within flange areas 24 melt or otherwise soften to a degree that facilitates welding between flange areas 24, as depicted in Figure 9C, thereby forming seam 22 between panels 21. Once seam 22 is formed by bonding flange areas 24 together, portions 51 may retract from flange areas 24, as depicted in Figure 9D. Excess portions of flange areas 24, which may include portions that define registration apertures 26, are then trimmed or otherwise removed to complete the formation of one of seams 22, as depicted in Figure 9E.

A variety of trimming processes may be utilized to remove the excess portions of flange areas 24. As examples, the trimming processes may include the use of a cutting apparatus, a grinding wheel, or an etching process. As another example, welding die 50 may incorporate cutting edges 53, as depicted in Figure 10, that are configured to trim flange areas 24 during the welding process. That is, cutting edges 53 may be utilized to protrude through flange areas 24 and effectively trim flange areas 24 as portions 51 heat and compress flange areas 24 together between facing surfaces 52.

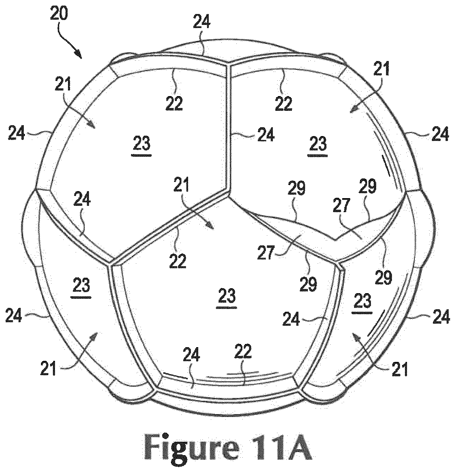

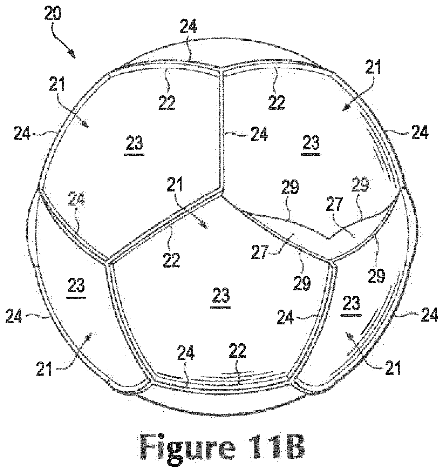

The general process of welding flange areas 24 to form seams 22 between panels 21 was generally discussed above relative to Figures 9A-9E. This general process may be repeatedly performed with multiple panels 21 and on multiple flange areas 24 of each panel 21 to effectively form a generally spherical or closed structure, as depicted in Figure 11A. That is, multiple panels 21 may be welded together through the general process discussed above in order to form various seams 22 in casing 20. A similar configuration is depicted in Figure 11B, wherein flange areas 24 are trimmed. As discussed above, the trimming or removal of flange areas 24 may occur following the welding process or may occur at the time of the welding process.

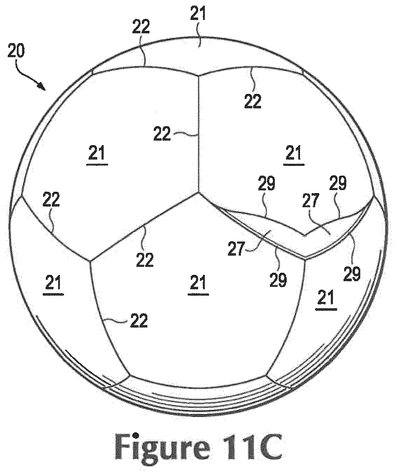

Although seams 22 are generally formed between each of flange areas 24, one or more seams 22 may remain unformed at this stage of the process. Referring to Figures 11A and 11B, two unbonded areas 27 are located adjacent to each other and form an opening in casing 20. One purpose of unbonded areas 27 is that casing 20 may be turned inside-out or otherwise reversed through the opening or aperture formed by unbonded areas 27. More particularly, unbonded areas 27 may be separated to form the opening, as depicted in Figure 11B, and casing 20 may be reversed or turned inside-out through that opening to impart the configuration depicted in Figure 11C. Whereas the trimmed portions of flange areas 24 protrude outward in Figure 11B, reversing or turning casing 20 inside-out through the opening from unbonded areas 27 places all of flange areas 24 within casing 20. Accordingly, the trimmed flange areas 24 protrude inward, rather than outward, once casing 20 is reversed or turned inside-out. Referring to Figure 3, for example, an exterior of casing 20 has a generally smooth configuration, while portions of casing 20 corresponding with flange areas 24 protrude inward. Although panels 21 form an indentation on the exterior of sport ball 10 in the areas of seams 22, similar indentations are commonly found in game balls with stitched seams.

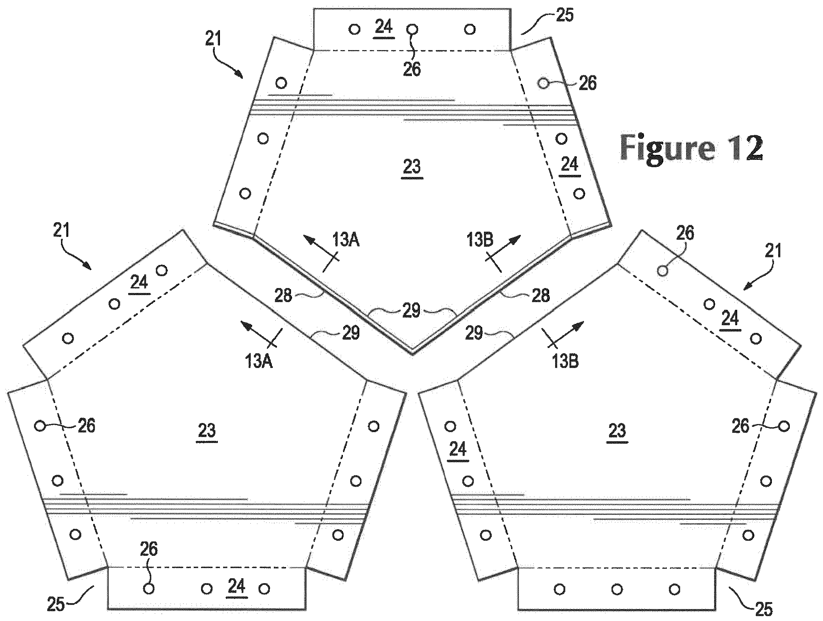

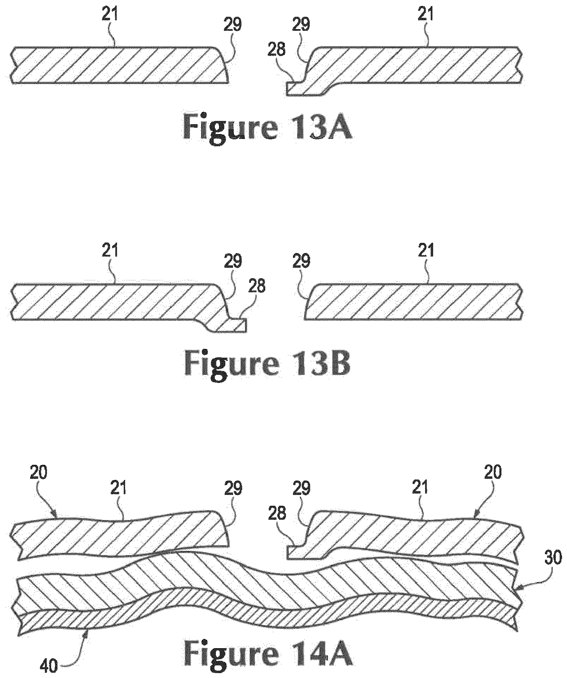

A further consideration at this stage of the manufacturing process relates to the configurations of panels 21 that form unbonded areas 27. Referring to Figure 4, this panel 21 includes five flange areas 24 that extend around edges of the pentagonal panel area 23, and a majority of panels 21 exhibit this configuration. In panels 21 that form unbonded areas 27, which are collectively depicted in Figure 12, various flange areas 24 are absent. Additionally, as depicted in the cross-sections of Figures 13A and 13B, two edges 29 where flange areas 24 are absent may be molded or otherwise shaped. Although unbonded areas 27 are formed between two sets of adjacent edges 29, a single unbonded area may be formed between only two edges 29. Accordingly, the opening formed by unbonded areas 27 is formed between edges 29 of at least two panels 21, but may be formed between four or more edges 29.

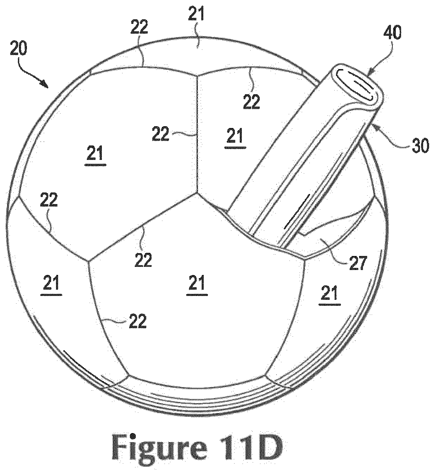

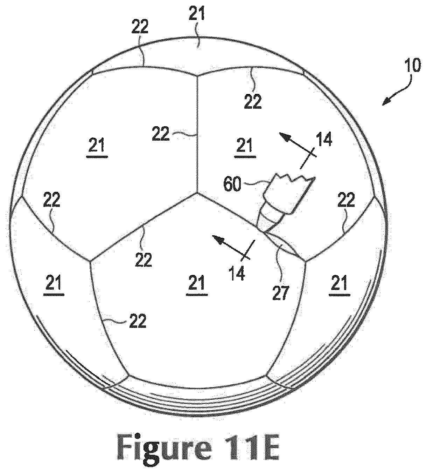

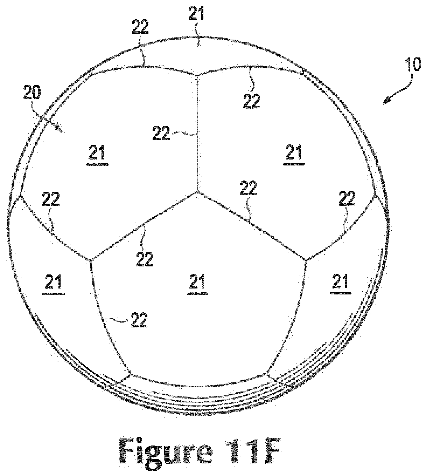

At this stage of the manufacturing process, casing 20 is substantially formed and the surfaces of casing 20 are correctly oriented. The opening in casing 20 formed by unbonded areas 27 may now be utilized to insert intermediate layer 30 and bladder 40, as depicted in Figure 11D. That is, intermediate layer 30 and bladder 40 may be located within casing 20 through the opening that was utilized to reverse or turn casing 20 inside-out. Intermediate layer 30 and bladder 40 are then properly positioned within casing 20, which may include partially inflating bladder 40 to induce contact between surfaces of intermediate layer 30 and casing 20. Additionally, the valved opening (not depicted) of bladder 40 may be located to extend through intermediate layer 30 and casing 20, thereby being accessible from an exterior of sport ball 10. Once intermediate layer 30 and bladder 40 are properly positioned within casing 20, the opening in casing 20 formed between unbonded flange areas 24 may be sealed, as depicted in Figure 11E. More particularly, a sealing die 60 may form a weld between the unbonded flange areas 24 (i.e., in unbonded areas 27) to form a final seam 22 that effectively closes casing 20, thereby substantially completing the manufacturing process of sport ball 10, as depicted in Figure 11F. As an alternative to welding, stitching or adhesives may be utilized to close casing 20.

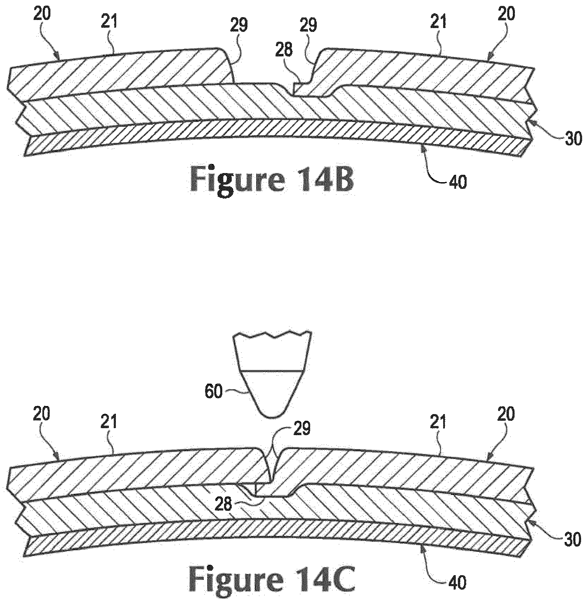

The manner in which seams 22 are formed at unbonded areas 27 will now be discussed in greater detail. Referring to Figure 11E, a cross-section line 14-14 is defined as extending through the area of sport ball 10 where sealing die 60 is joining two panels 21 to form seams 22. The overall process for joining the panels 21 at unbonded areas 27 is discussed in relation to cross-section line 14-14 in Figures 14A-14E. As shown in Figure 14A, panels 21 of casing 20 may rest loosely against the combination of intermediate layer 30 and bladder 40, both of which were recently inserted into the interior of casing 20. Bladder 40 is then inflated, as depicted in Figure 14B, which imparts a firm and rounded configuration to the combination of intermediate layer 30 and bladder 40. Moreover, intermediate layer 30 presses outward upon casing 20 and lays adjacent to an interior surface of casing 20, thereby imparting a generally spherical aspect to sport ball 10.

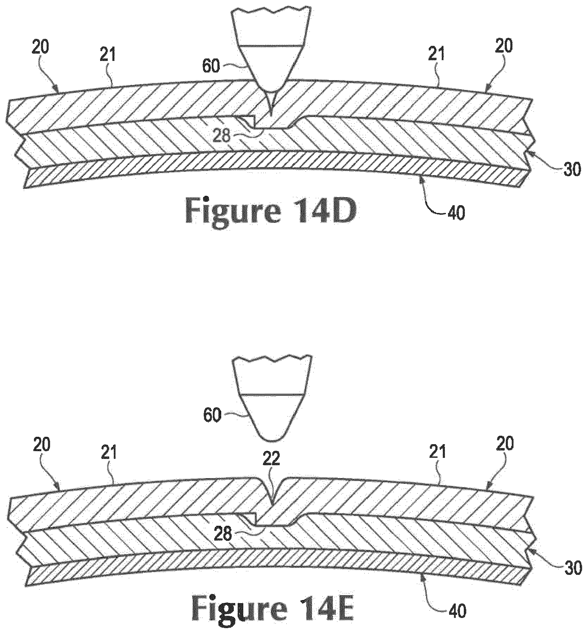

According to the invention and depicted in the cross-sections of Figures 13A and 13B, edges 29 where flange areas 24 are absent may be molded or otherwise shaped. More particularly, both of edges 29 are shaped to have a radius or generally rounded configuration. That is, edges 29 have curved configurations extending from an outer surface to an inner surface of casing 20, thereby extending toward and interior of sport ball 10. Additionally, one of edges 29 also defines a projection 28. Referring to Figure 14C, projection 28 extends outward and under the other edge 29, thereby being positioned between the other edge 29 and both of intermediate layer 30 and bladder 40. At this stage, sealing die 60 is positioned adjacent to the two edges 29. Sealing die 60 then presses downward on edges 29 and heats the material of panels 21 at edges 29 to weld edges 29 together, including bonding projection 28 to the other edge 29, as depicted in Figure 14D. Sealing die 60 then retracts once a seam 22 is formed between the two panels 21, as depicted in Figure 14E. Moreover, the seam 22 has the general appearance of other seams 22 (see Figure 3) due to the radius or generally rounded configuration. Aesthetically, therefore, the seam 22 formed between unbonded areas 27 appears similar or even identical to other seams 22 in sport ball 10.

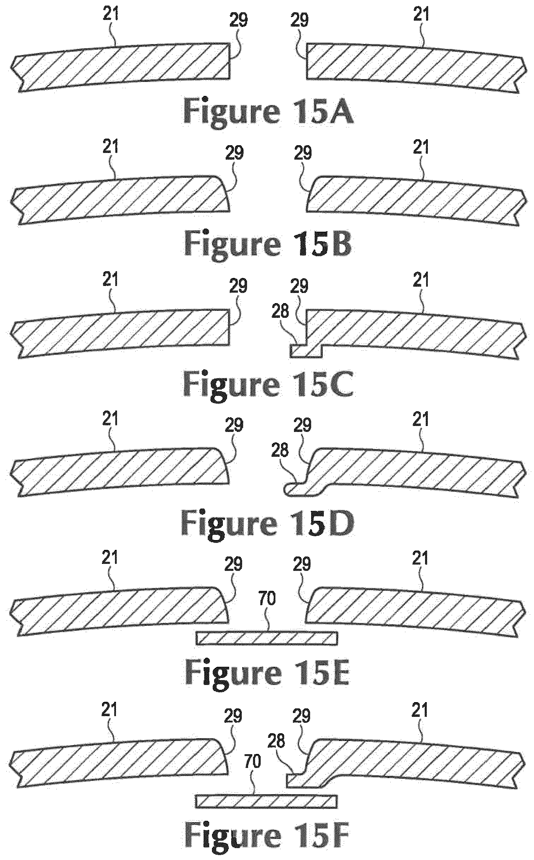

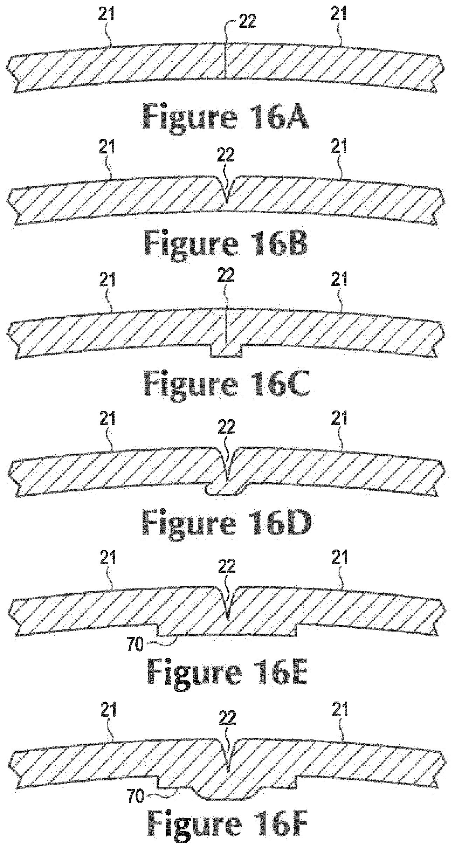

Molding or shaping the edges where flange areas 24 are absent, as in Figures 13A and 13B, imparts two advantages to sport ball 10. First, projection 28 forms a flange that assist in forming and strengthening the weld between the two panels 21. Second, the radius or rounded configuration of edges 29 imparts the general appearance of other seams 22 in sport ball 10. Although projection 28 and the rounded configuration of edges 29 may be utilized in sport ball 10, a variety of other configurations may also be utilized. As an example, Figure 15A depicts a configuration wherein edges 29 have squared configurations, and Figure 16A depicts these squared edges 29 as being joined. In this configuration, seam 22 may exhibit a smooth rather than indented aspect. Edges 29 may also have a rounded configuration wherein projection 28 is absent, as depicted in Figures 15B and 16B. In another configuration, projection 28 may be present, but edges 29 may have the squared configuration, as depicted in Figures 15C and 16C. A length of projection 28 may also vary. Referring to Figures 15D and 16D, for example, projection 28 exhibits greater length than in other configurations. As a further example, a supplemental layer 70 may be utilized to assist in bonding panels 21 together. Although the configuration may vary, supplemental layer 70 may incorporate a thermoplastic polymer material that becomes welded to panels 21. Referring to Figure 15E supplemental layer 70 is located below panels 21 and extends across the gap formed by edges 29. Upon welding, as depicted in Figure 16E, each of panels 21 are joined to supplemental layer 70, and edges 29 may also be joined to each other. Supplemental layer 70 may also be utilized with any of the configurations discussed above to further strengthen seam 22 or otherwise assist with the welding process. Referring to Figures 15F and 16F, for example, supplemental layer 70 is utilized with a configuration wherein edges 29 are rounded and one of edges 29 defines projection 28. Accordingly, the configuration of panels 21 at edges 29 may vary considerably to impart a variety of configurations to the seam 22 utilized to close sport ball 10.

Based upon the above discussion, casing 20 of sport ball 10 may be formed by joining the various panels 21 at seams 22 with a first welding operation (i.e., with welding die 50). In order to place protruding portions of flange areas 24 within sport ball 10, casing 20 may be effectively reversed or otherwise turned inside-out through an opening in casing 20. Once intermediate layer 30 and bladder 40 are positioned within casing 20, the opening may be sealed with a second welding operation (i.e., with sealing die 60). Two different welding operations utilizing two different welding apparatuses are, therefore, utilized to join panels 21 and form casing 20. Moreover, the first welding operation forms a majority of seams 22, while the second welding operation forms the final few seams 22. Additionally, edges 29 may be molded or otherwise formed to have a structure that effectively welds together. As an example, both edges 29 may be molded or shaped to have a radius or generally rounded configuration, and one of edges 29 also defines a projection 28.

### Second Manufacturing Process

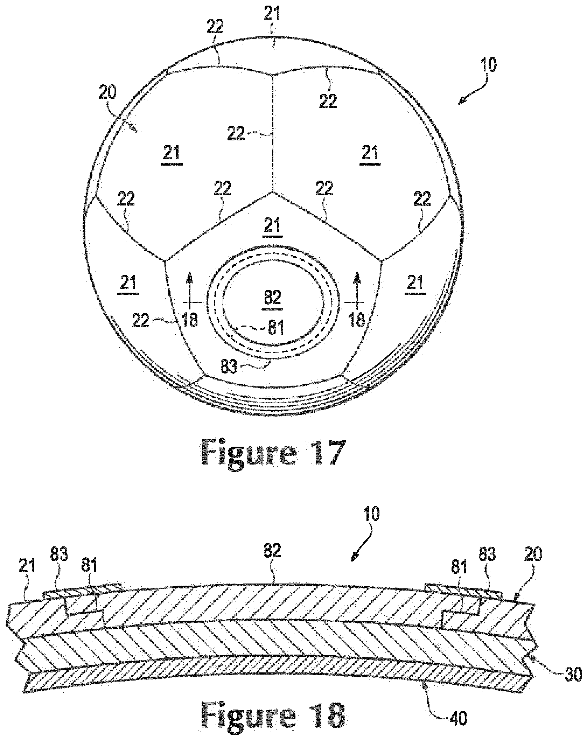

An opening in casing 20 formed between unbonded flange areas 24 (i.e., in unbonded areas 27) is one example of a structure that may be utilized to (a) reverse or turn casing 20 inside-out to place protruding flange areas 24 within casing 20 and (b) insert intermediate layer 30 and bladder 40 within casing 20. As another example, one of panels 21 may define an aperture 81 that is sealed with a plug 82 and covered with a cover layer 83, as depicted in Figures 17 and 18. More particularly, aperture 81 may be utilized to (a) reverse or turn casing 20 inside-out to place protruding flange areas 24 within casing 20 and (b) insert intermediate layer 30 and bladder 40 within casing 20. Once these steps are complete, plug 82 is located within aperture 81 and welded or otherwise joined to the panel 21 defining aperture 81. Although sealing die 60 or a similar apparatus may be utilized to weld plug 82 to casing 20, stitching or adhesives may also be utilized to close casing 20. Once welding is complete, cover layer 83 may be bonded, welded, adhered, or otherwise joined to casing 20 to cover the weld between plug 82 and the remainder of panel 21.

Cover layer 83 (a) strengthens the weld between plug 82 and the remainder of panel 21 and (b) enhances the aesthetics of sport ball 10. More particularly, cover layer 83 covers the weld between plug 82 and the remainder of panel 21, thereby concealing and protecting the weld. Additionally, the weld between plug 82 and the remainder of panel 21 is spaced inward from the various seams 22 that join panels 21 together. Cover layer 83 may be colored, textured, or otherwise adorned in a manner that enhances the visual appeal of sport ball 10. In other configurations, cover layer 83 may also include (a) trademark information that identifies a manufacturer of sport ball 10 or (b) inflation instructions for sport ball 10, for example. Although an adhesive may be utilized to join cover layer 83 to sport ball 10, cover layer 83 may also be welded to the surface of sport ball 10. In some configurations, cover layer 83 may be a decal, appliqué, adhesive element, thermoplastic element, or a sticker that is secured over the weld between plug 82 and the remainder of panel 21.

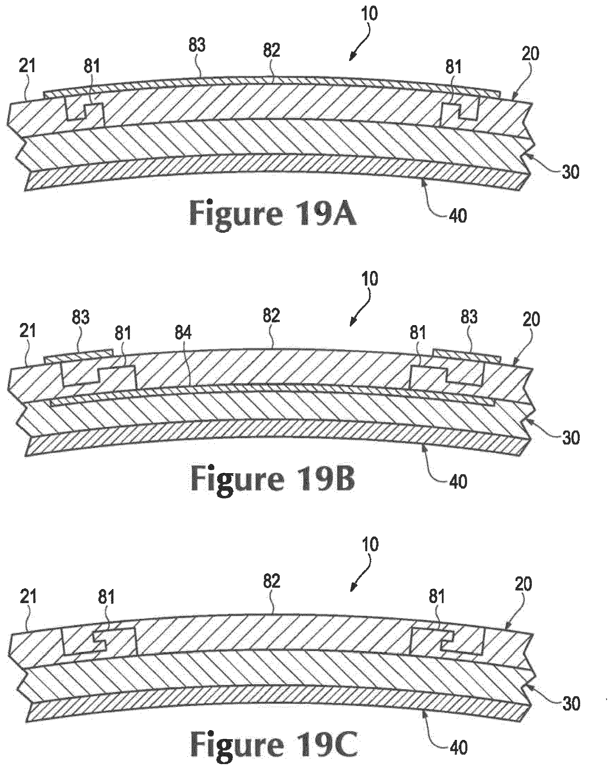

The shape and dimensions of cover layer 83 are generally selected to cover the weld between plug 82 and the remainder of panel 21. Referring to Figures 17 and 18, cover layer 83 has a generally circular configuration that covers the weld, but does not cover other areas of plug 82. In contrast, Figure 19A depicts a configuration wherein cover layer 83 extends across the surface of plug 82 and covers substantially all of plug 82. In some configurations, a supplemental layer 84 may be placed between intermediate layer 30 and casing 20 to assist with bonding, as depicted in Figure 19B. Although the configuration may vary, supplemental layer 84 may incorporate a thermoplastic polymer material that becomes welded to panel 21 and plug 82. In some configurations, as depicted in Figure 19C, layers 83 and 84 may be absent from sport ball 10. Referring to Figure 18, the sides of both aperture 81 and plug 82 have corresponding stepped configurations that mate and join in a relatively smooth manner. A variety of other configurations may also be utilized, as depicted in the cross-sectional views of Figure 19A-19C, to impart greater strength or otherwise enhance the bond between aperture 81 and plug 82.

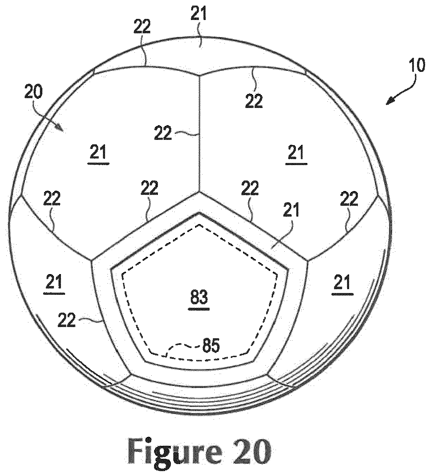

Although plug 82 may be separate from panel 21 and subsequently joined, a similar configuration may be achieved with the use of a flap 85, as depicted in Figure 20. Whereas plug 82 is separate from panel 21, flap 85 is formed by cutting through panel 21 to form an opening that may be utilized to (a) reverse or turn casing 20 inside-out to place protruding flange areas 24 within casing 20 and (b) insert intermediate layer 30 and bladder 40 within casing 20. Once these are complete, flap 85 may be welded to close the opening. Additionally, the weld between flap 85 and the remainder of panel 21 is spaced inward from the various seams 22 that join panels 21 together. As depicted in Figure 20, panels 21 have pentagonal shapes, flap 85 has a pentagonal shape, and cover layer 83 has a pentagonal shape that covers a majority of a surface of panel 21. An advantage to this configuration is that the area of the opening formed by flap 85 is maximized, thereby making the process of reversing casing 20 easier. In further configurations, cover layer 83 may only cover the area of the weld between flap 85 and the remainder of panel 21.

Based upon the above discussion, casing 20 may be at least partially formed by joining panels 21 through a welding process. In comparison with other methods of joining panels, the welding process may reduce the overall mass of sport ball 10 and increase manufacturing efficiency. Once the welding process is utilized to join panels 21, an opening in casing 20 may be utilized to reverse or turn casing inside-out to place protruding areas within sport ball 10, thereby forming a substantially smooth exterior surface. Additionally, intermediate layer 30 and bladder 40 may be inserted through the opening in casing 20 (see Figure 11D), which is subsequently sealed (see Figure 11E).

In some embodiments, a supplemental layer may be used to reinforce sections of the casing other than the final seams closed after the casing is turned right side to. For example, a plurality of reinforcing strips may be used to reinforce a substantial majority of seams between casing panels. Such reinforcing strips may be affixed to an internal surface of the casing and may extend across seams between panels of the casing. Accordingly, in some embodiments, forming the ball may include affixing a plurality of reinforcing strips to the casing at a substantial majority of the interfaces between abutting panel edges.

Use of reinforcing strips to reinforce seams may provide a variety of benefits. For example, reinforcing strips may provide the ball with increased durability, for instance by providing increased strength at seams. In addition, reinforcing strips may also provide various performance advantages, such as resiliency. For example, the elasticity of the reinforcing strips may bias the casing to return rapidly to a predetermined shape (for example round). In addition, reinforcing strips may be beneficial in maintaining a consistent shape. For example, during use a ball deforms as it impacts the ground and player's feet. By providing relatively inelastic reinforcing strips on all, or substantially all, of the seams, the arrangement of reinforcing strips may bias the ball to return repeatedly to the pre-formed shape (for example round) of the reinforcing strip arrangement. Further, an arrangement of relatively elastic or inelastic strips may limit the amount to which the ball may deform upon impact, which may also be a desirable performance characteristic.

In addition to providing desirable performance characteristics, reinforcing strips may also permit variations in construction of the ball. For example, a reinforcing strip may provide additional strength and durability to a seam between adjacent casing panels such that the joinder of the adjacent casing panels may be less robust. That is, any joinder of the panels in addition to the connection provided by the attachment of the reinforcing strip to two adjacent panels.

For example, in some embodiments, welding of adjacent panels to one another may be less robust. For example, flanges at the edges of adjacent panels that are welded may be trimmed shorter if a reinforcing strip is affixed to reinforce the seam. This may save weight, particularly if the reinforcing strip is made of a lighter weight material than the material from which the casing flanges are formed. In some embodiments, extra trimming of the flanges may at least partially offset additional weight added by the reinforcing strips. Moreover, shortened flanges may provide the casing with greater flexibility, which may provide the ball with a supple feel that is more consistent over the surface of the ball.

In some embodiments, a stitched seam may use less robust stitching. For instance, a thinner thread or a thread with a lower tensile strength may be used for stitching. Additionally or alternatively, fewer stitches may be used to join adjacent panels. Using a thinner thread, a thread with a lower tensile strength, or simply using less thread due to fewer stitches may save on manufacturing costs, as well as materials costs.

Similarly, panels joined with adhesive may utilize less adhesive or may use a lower strength adhesive. Using less adhesive or an adhesive with lower strength may save on manufacturing costs, as well as materials costs. Using less adhesive may provide the casing with greater flexibility, which provides the ball with a supple and consistent feel, as discussed above.

Further, in some embodiments, adjacent panels may not be joined at all independent of a reinforcing strip affixed to the internal surfaces of adjacent panels and extending across the seam between the adjacent panels. That is, in some embodiments, the reinforcing strip may provide the only connective feature joining a pair of adjacent panels. Thus, manufacturing costs, materials costs, and manufacturing time may be saved by omitting the manufacturing step of joining the panels (for example, by welding, stitching, or adhesive) prior to affixing the reinforcing strips to the casing. In addition, weight may also be saved as compared to configurations in which the panels are stitched or adhesively joined to one another because the thread and adhesive material is omitted.

In some embodiments, reinforcing strips may be utilized on a select few seams of the ball. For example, in some embodiments, a closure seam (the final seam closed to seal the ball; see Figure 11E) may be the only seam that utilizes a reinforcing strip. The embodiments shown in Figures 15E, 15F, and 19B and discussed above are exemplary embodiments that utilize a reinforcing layer for closure seams. In some embodiments, a substantial majority of seams of the ball may be reinforced with reinforcing strips. Further, in some embodiments, all of the seams of the ball, including the closure seam, may be reinforced with reinforcing strips.

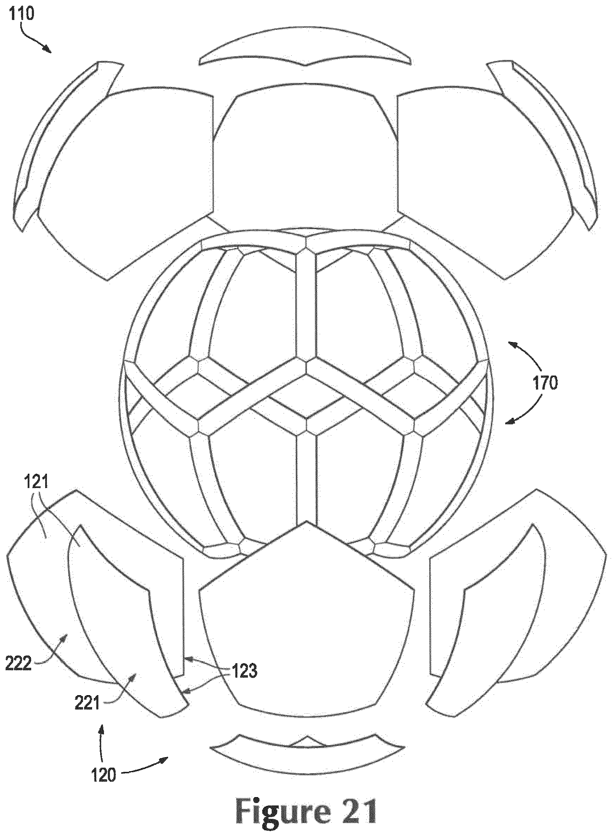

Figure 21 is an exploded view of components of a sport ball 110. As shown in Figure 21, ball 110 may include a casing 120. Casing 120 may be formed of any suitable materials for forming external layers of a sport ball. Exemplary casing materials and configurations are discussed above with regard to other embodiments. Casing 120 may be formed of a plurality of casing panels 121. Edges 123 of panels 121 may be joined, to form seams, and to thereby form casing 120. Accordingly, casing 120 may be formed by providing a plurality of casing panels and abutting edges of the casing panels together. Each of panels 121 may include an external exposed surface 221. External exposed surfaces 221 face radially outward and are exposed to the environment when manufacturing of the ball is completed. Each of panels 121 may also include an internal surface 222. internal surfaces 222 may face radially inward toward the center of ball 110 when manufacturing of the ball is completed.

As further shown in Figure 21, ball 110 may include a plurality of reinforcing strips 170. Reinforcing strips 170 may be affixed to internal surfaces 222 of panels 121 to reinforce the seams between adjacent panels 121. In Figure 21, reinforcing strips 170 are shown in an arrangement corresponding with the location of seams between panels 121 when casing 120 is assembled. As shown in Figure 21, panels 121 may have a pentagonal shape. Accordingly, reinforcing strips 170 may be arranged in a pentagonal grid, thus forming a skeletal structure of ball 110. In other embodiments, panels 121 may have other geometrical shapes and reinforcing strips 170 may be arranged to correspond with the seams between panels having such other geometrical shapes. In some embodiments, panels 121 may be polygonal, and thus, may have other shapes, such as triangular, square, hexagonal, and other polygonal shapes. Those having skill in the art will recognize other possible panel shapes for a sport ball.

Further, Figure 21 illustrates sport ball 110 as a spherical ball. For example, ball 110 may be a soccer ball. However, the use of reinforcing strips may be applicable to other types of sport balls, including other spherical balls, such as basketballs. Further, reinforcing strips may be applicable to balls having other shapes, such as American footballs, which have a prolate spheroidal shape.

Reinforcing strips 170 may be formed of any suitable material. For example, reinforcing strips 170 may be formed of fabrics, textiles, polymer sheets, meshes, or other sheet-like materials. In some embodiments, reinforcing strips 170 may be formed of a relatively elastic material to provide performance benefits, such as resiliency. In some embodiments, reinforcing strips 170 may be formed of a relatively inelastic material to provide structural support and shape retention.

In some embodiments, reinforcing strips 170 may be affixed to the panels of casing 120 with an adhesive material. In some embodiments, the adhesive may be pre-applied to reinforcing strips 170, and thus, reinforcing strips 170 may be formed of a reinforcing tape. In other embodiments, the adhesive may be applied to casing 120 before applying reinforcing strips 170. In some embodiments, the adhesive may be applied to reinforcing strips 170 in situ during manufacturing, before applying reinforcing strips 170 to casing 120.

In some embodiments, ball 110 may include a heat-activated (thermally activated) material associated with reinforcing strips 170 that may bond reinforcing strips 170 to casing 120. For example, in some embodiments, reinforcing strips 170 may be affixed to casing 120 with a heat-activated adhesive. In some embodiments, reinforcing strips 170 themselves may be formed, at least in part, from a thermoplastic polymer material configured to be activated by heat to bond with the internal surface of casing 120.

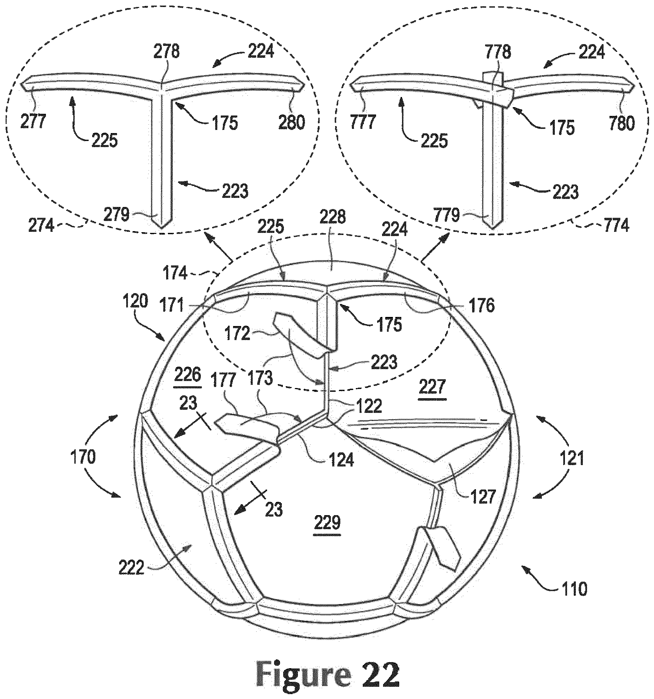

Figure 22 illustrates a casing 120 of a sport ball 110 during assembly of ball 110. When ball 110 is fully assembled, casing 120 may be the outermost component of ball 110, and thus may form an external exposed surface of ball 110. It will be understood, however, that there may be additional coatings, graphics, or other surface treatments applied to the outer surface of casing 120. Such coatings may be substantially thin as compared to the thickness of the structural layer or layers of casing 120. Accordingly, such coatings may be considered part of casing 120.

As shown in Figure 22, casing 120 may be formed inside-out to facilitate the joining of a plurality of casing panels 121 to form seams 122. In some embodiments, panels 121 may be joined to one another, for example by welding. For instance, a first panel 226 may be joined to a second panel 227 at a first seam 223. Second panel 227 may be joined to third panel 228 at a second seam 224. In addition, third panel 228 may be joined to first panel 226 at a third seam 225.

During assembly, panels 121 may be joined to one another to form casing 120 inside out, with internal surface 222 of panels 121 facing outward, as illustrated in Figure 22. This facilitates the process of joining panels 121 at seams 122, because flange portions 124 of panels 121 are exposed when casing 120 is inside out, as shown in Figure 22. One or more seams are left unclosed to form an opening 127 through which the ball may be turned right side out for further assembly.

In some embodiments, one or more reinforcing strips 170 may be affixed to internal surface 222 of casing 120, as shown in Figure 22. For example, a first reinforcing strip 172 may be affixed to first seam 223. A second reinforcing strip 176 may be affixed to second seam 224. A third reinforcing strip 171 may be affixed to third seam 225. First reinforcing strip 172 is shown, in Figure 22, in a partially affixed condition. During assembly, first reinforcing strip 172 may be applied over seam 223, as illustrated by an arrow 173. Additional processing, such as the application of heat and pressure, may also be used to affix reinforcing strips 170 to casing 120, as discussed in greater detail below.

In some embodiments, individual reinforcing strips may be applied to each seam, in a one-to-one correspondence. In some embodiments, reinforcing strips affixed to intersecting seams may abut one another at the intersection of the seam. This configuration may minimize the amount of material used, and thus, may reduce weight. In addition, this configuration may provide an even distribution of weight. In other embodiments, reinforcing strips may overlap one another at the intersection. This configuration may provide additional reinforcement at the intersection of the seams. In addition, affixing the reinforcing strips in an overlapping fashion may require less precision, and thus, may reduce manufacturing costs. In some embodiments, a single reinforcing strip may be affixed to more than one seam. For example, in some cases, the reinforcing strip may have a multi-spoked configuration, where the reinforcing strip may be applied to multiple seams extending from a common intersection point. This configuration may provide additional reinforcement at the intersection point similar to the overlapping configuration, because there is no discontinuity of the strip at the intersection point. Further, this multi-pronged configuration may provide weight reduction in a similar manner as the abutting configuration. In addition, a multi-spoked reinforcing strip may facilitate and expedite alignment and application of reinforcing strips to the casing during assembly.

First reinforcing strip 172, second reinforcing strip 176, and third reinforcing strip 171, identified by a first dashed oval 174, converge at a first intersection point 175. As shown in Figure 22, first reinforcing strip 172, second reinforcing strip 176, and third reinforcing strip 171 may intersect in an abutting fashion at intersection point 175. In some embodiments, first reinforcing strip 172, second reinforcing strip 176, and third reinforcing strip 171 may remain as separate pieces of material that simply abut one another. In other embodiments, first reinforcing strip 172, second reinforcing strip 176, and third reinforcing strip 171 may be formed, at least in part, from a thermoplastic material that may be heat activated to melt the adjoining edges of the reinforcing strips together.

An alternative reinforcing strip configuration is illustrated in a dashed oval 274. This configuration includes a multi-spoke reinforcing strip. This multi-spoke reinforcing strip may have a first spoke 279 extending from a center portion 278 corresponding with intersection point 175 of first seam 223, second seam 224, and third seam 225. First spoke 279 may be configured to be affixed to first seam 223. In addition, the multi-spoke reinforcing strip may also include a second spoke 280 extending from center portion 278 and configured to be affixed to second seam 224. Further, the multi-spoke reinforcing strip may include a third spoke 277 extending from center portion 278 and configured to be affixed to third seam 225. Accordingly, this multi-spoke reinforcing strip may be pre-formed to cover more than one seam. It will be noted that, although a substantially Y-shaped, tri-spoke strip configuration is shown, the configuration of reinforcing strips having multiple segments to be applied to multiple seams may vary. In some embodiments, reinforcing strips may have greater or fewer segments. In addition, in some embodiments, the reinforcing strip segments may be linear. In other embodiments, the reinforcing strip segments may be non-linear.

A dashed oval 114 in Figure 22 illustrates another reinforcing strip intersection configuration, in which multiple individual reinforcing strips may overlap one another. For example, a first reinforcing strip 779 may be configured to be affixed to first seam 223. A second reinforcing strip 780 may be configured to be affixed to second seam 224. A third reinforcing strip 777 may be configured to be affixed to third seam 225. First reinforcing strip 779, second reinforcing strip 780, and third reinforcing strip 777 may all overlap a central location 778 and extend from central location 778, which may correspond with intersection point 175 of first seam 223, second seam 224, and third seam 225.

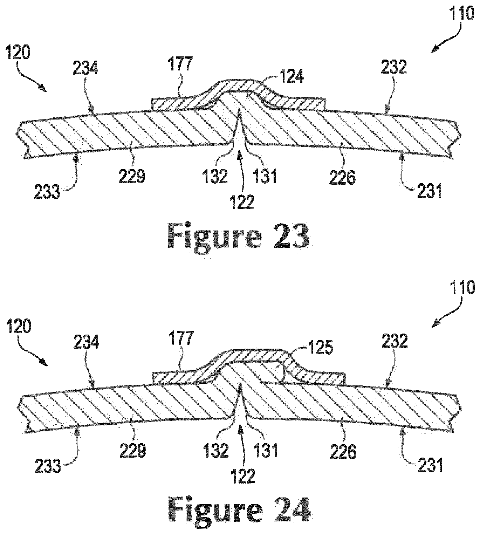

As shown in Figure 22, ball 110 may include a fourth casing panel 229. Fourth casing panel 229 may be joined to first casing panel 226. A fourth reinforcing strip 177 may be affixed to seam 122. Figure 23 illustrates a cross-sectional view taken at line 23-23 in Figure 22. As shown in Figure 23, first panel 226 may include a first external exposed surface 231 and a first internal surface 232. It will be noted that, although first internal surface 232 is shown in Figure 22 as being on an external side, first internal surface 232 is referred to as "internal" because it will be internal once the casing is turned right side out. The term first external exposed surface 231 also follows a similar convention. Fourth panel 229 may include a second external exposed surface 233 and a second internal surface 234.

As shown in Figure 23, first panel 226 may have a first edge 131 and fourth panel 229 may have a second edge 132, which may abut one another at an interface at seam 122. As further shown, first edge 131 may be joined, for example by welding, to second edge 132. As discussed above, the welding may be completed by welding flanges extending from first edge 131 and second edge 132 to one another, resulting in flange portion 124.

Reinforcing strip 177 may be affixed to flange portion 124, first internal surface 232 of first panel 226, and second internal surface 234 of fourth panel 229. Thus, reinforcing strip 177 may extend across the interface between first panel 226 and fourth panel 229. As shown in Figure 23, flange portion 124 may be trimmed relatively short due to the reinforcement of seam 122 provided by reinforcing strip 177.

As shown in Figure 23, first edge 131 and second edge 132 may be contoured to have a profile that, when first edge 131 is abutting second edge 132 an indentation may be provided at the interface between first panel 226 and fourth panel 229. This indentation may have an appearance that resembles a traditional stitched seam interface, which may have an indentation between panels.

Figure 24 illustrates another configuration of ball 110. In the configuration shown in Figure 24, a flange portion 125 may be relatively longer than flange portion 124 in Figure 23. This longer flange portion 125 may provide additional strength to seam 122 because more surface area of adjacent flanges is joined. In addition, by maintaining a longer flange, manufacturing time and expense may be reduced because flange trimming may be reduced, rendered less complicated, or eliminated altogether. When reinforcing strip 177 is affixed to seam 122, in some embodiments, longer flange portions 125 may fold over against first inner surface 232 of first panel 226, as shown in Figure 24, or against second inner surface of fourth panel 229.

After panels of the ball are assembled inside out and reinforcing strips are applied to the casing, the casing may be turned right side out through an opening (see opening 127 in Figure 22). Thus, manufacturing of the ball may include orienting the casing to have a first external exposed casing surface and a second internal casing surface, such that the plurality of reinforcing strips is affixed to the second internal casing surface.

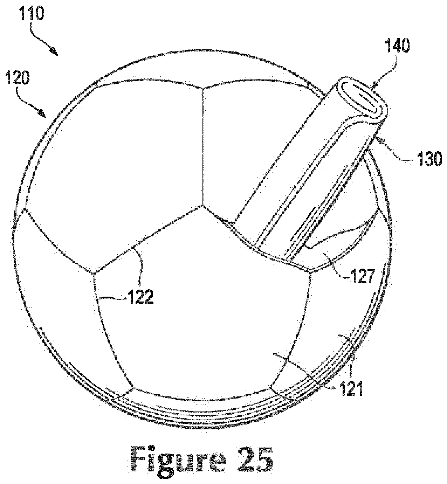

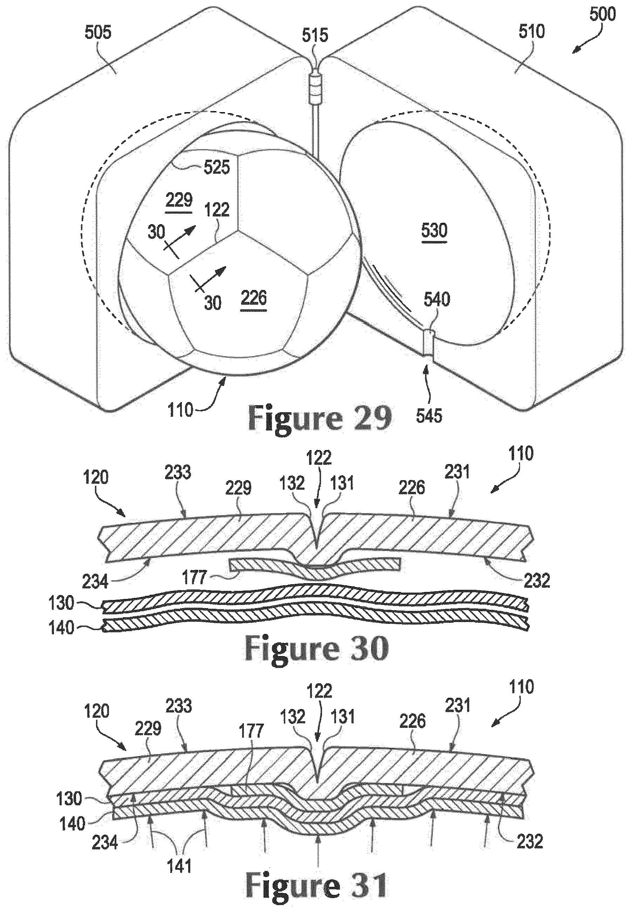

After casing 120 has been turned right side out, an intermediate layer 130 and a bladder 140 may be inserted into casing 120, as shown in Figure 25. Intermediate layer 130 and bladder 140 may be formed to have the same or similar configurations and materials as other embodiments discussed above. Bladder 140 may be configured to retain a pressurized gas. After insertion into casing 120, intermediate layer 130 may be located radially between casing 120 and bladder 140. (See Figure 30.) The elasticity of intermediate layer 130 may be less than the elasticity of casing 120. Accordingly, intermediate layer 130 may resist or limit stretch of ball 110 upon inflation of bladder 140. In addition, the inelasticity of intermediate layer 130 may maintain the shape (for example sphericity) of ball 110 under pressurization. Further, intermediate layer 130 may restrict the distortion of ball 110 upon impact during use.

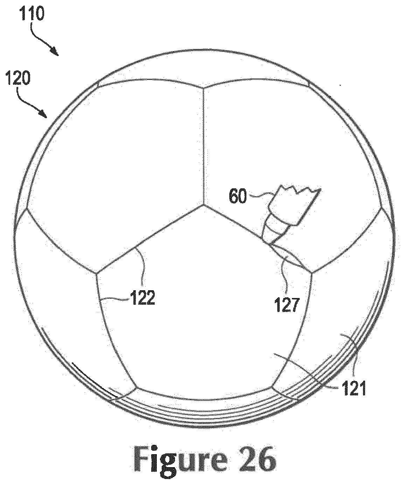

After bladder 140 and intermediate layer 130 have been inserted into casing 120, opening 127 may be closed. For example, in some embodiments, opening 127 may be welded closed with a sealing die 60, as shown in Figure 26. The closure of opening 127 may be performed according to several different variations discussed in conjunction with other embodiments above.

In some embodiments, the reinforcing strips may be self-adhering, and thus, may be affixed to the casing simply by applying the strips as one would with a piece of adhesive tape. In such embodiments, the manufacturing process may be complete once opening 127 is closed. In other embodiments, however, the reinforcing strips may be affixed to the casing with a heat-activated material. For example, in some embodiments, the reinforcing strips may be formed from, or coated with, a thermoplastic material. Other heat-activated adhesive materials may also be utilized to affix the reinforcing strips to the casing. In order to activate these heat-activated materials, heat and, in some cases, pressure may be applied to the reinforcing strips. In some embodiments, this may be performed while the casing is inside out.

In other embodiments, this application of heat and pressure may be performed after the ball has been turned right side out and after opening 127 has been closed. Once the ball has been formed such that all seams have been sealed, as depicted in Figure 26, the bladder may be fully pressurized, and a heat-activated material associated with the reinforcing strips may be activated to strengthen the bond across the seams on the interior of the ball. For example, an apparatus having a spherical cavity configured to receive the ball may be used to apply heat and pressure to the reinforcing strips. Once disposed inside the cavity, the bladder may be inflated, which will expand radially outward, pressing the reinforcing strips against the internal surface of the casing. While the bladder applies pressure to the reinforcing strips, heat may be applied in any suitable way to activate the heat-activated material.

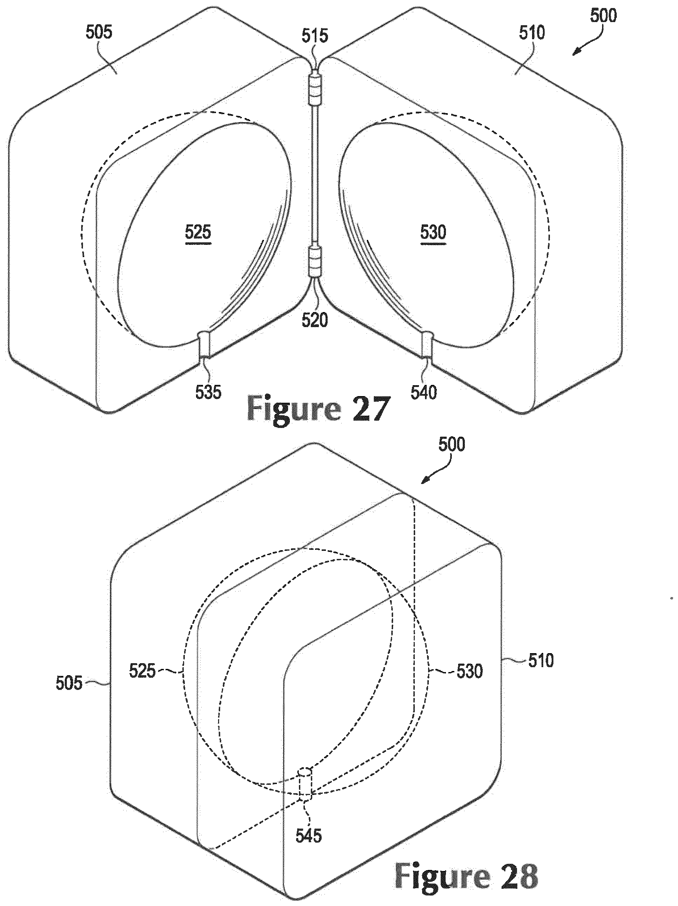

Figure 27 depicts a manufacturing assembly 500, which may be used to finish pressurization of the ball and to activate the heat-activated material associated with the reinforcing strips. Assembly 500 may represent a cube or other three-dimensional shape with a hollowed-out spherical cavity for receiving a spherically-shaped ball. According to at least one embodiment, assembly 500 may be comprised of two substantially identical, but oppositely situated, sides, including a first side 505 and a second side 510. First side 505 may be hingedly attached to second side 510 with hinges, such as a first hinge 515 and a second hinge 520. As shown in Figure 27, opening assembly 500 may reveal the spherical cavity, which may be formed of a first hemispherical cavity 525 in first side 505 and a second hemispherical cavity 530 in second side 510.

Assembly 500 may further include an opening, formed by a first opening portion 535 in first section 505 and a second opening portion 540 in second section 510, to allow for insertion of a pressurization device (not shown). In addition, assembly 500 may also include a heat source (also not shown) for transferring heat to a ball placed in the cavity.

As shown in Figure 28, when assembly 500 is closed, first side 505 and second side 510 may mate in a flush manner with each other. When assembly 500 is closed, first opening portion 535 and second opening portion 540 may form an opening 545, as shown in Figure 28. In addition, when assembly 500 is closed, a spherical cavity may be formed by first hemispherical cavity 525 and second hemispherical cavity 530. It should be understood, however, that assembly 500 may be constructed in a variety of alternative shapes and sizes to accommodate a variety of ball shapes and sizes. For example, in some embodiments, assembly 500 may have prolate spheroidal shaped cavity configured to receive an American football.

Assembly 500 may be constructed from a variety of generally rigid materials that will not deform when subjected to stress, heat, or pressurization from within, yet will further allow for heat transfer to the ball. Examples of suitable materials for assembly 500 include various metals (for example, steel, aluminum, titanium, and alloys including such metals) and various polymer materials (for example, thermoset polymers and thermoplastic polymers with relatively high melting temperatures). Those skilled in the art will readily identify other related or suitable materials for use in assembly 500.

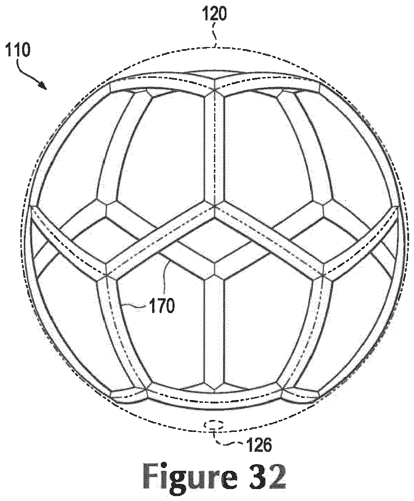

As shown in Figure 29, ball 110 may be placed in assembly 500 to complete pressurization and to activate heat-activated material associated with the reinforcing strips. Ball 110 may be placed such that the valve port (see Figure 32) is aligned with opening 545 of assembly 500 to allow an air source to be inserted into the valve opening for pressurization. According to additional embodiments, an air source may be incorporated into assembly 500. Once ball 110 is positioned in the spherical cavity, assembly 500 may be closed around ball 110. Once closed, assembly 500 provides a restrictive cavity for ball 110 for full pressurization to a desired shape, such as a spherical shape, as shown in Figure 29.

A variety of techniques may be utilized to activate the heat-activated material associated with the reinforcing strips. As will be appreciated by those skilled in the art, any technique useful for transferring heat across materials may be incorporated into, or utilized with assembly 500 or a similar structure. Such techniques may include, but are not limited to, conduction heating, radiant heating, radio frequency (RF) heating, ultrasonic heating, and laser heating. By using heat transfer from the walls of first hemispherical cavity 525 and second hemispherical cavity 530 across casing 120 while ball 110 is pressurized, the heat-activated material may be heated, thereby activating the material and bonding the reinforcing strips to the interior surface of casing 120 across the seams 122.

Assembly 500, by activating heat-activated material associated with the reinforcing strips during the pressurization process, may further strengthen seams 122 and add to the overall integrity of casing 120 of ball 110. As discussed above, in some embodiments, the reinforcing strips may be comprised of a thermoplastic polymer material that melts when heated and returns to a solid state when cooled sufficiently. Based upon this property of thermoplastic polymer materials, welding processes, as discussed above, may be utilized to join the reinforcing strips to portions of the interior side of casing 120, including portions of the interior side of the casing panels and across seams 122. In some embodiments, the reinforcing strips may be bonded to portions of the intermediate layer. In other embodiments, however, the casing and the reinforcing strips may remain unattached to the intermediate layer.

Accordingly, the bonding of the reinforcing strips to the interior side of the casing panels, across the seams, and in some cases to the intermediate layer, may involve melting the a thermoplastic polymer material associated with the reinforcing strips such that when the thermoplastic polymer material cools, it bonds to the interior side of the casing panels and across the seams to strengthen those portions of the casing. Furthermore, according to additional embodiments, thermoplastic polymer materials that may be present in the panels may be infiltrated or also melted, as described above, such that, during the heat bonding process, the thermoplastic casing material comingles with the thermoplastic polymer material associated with the reinforcing strips.

Figure 30 illustrates a cross-section of ball 110 taken at section line 30-30 in Figure 29, showing ball 110 before applying heat and pressure. Figure 31 illustrates ball 110 after applying heat and pressure (for example with apparatus 500 shown in Figure 29). As shown in Figure 30, in some embodiments, before the application of heat and pressure, bladder reinforcing strip 177 may be relatively loosely affixed to casing 120. As Figure 30 illustrates the layers of ball 110 prior to inflation of bladder 140, intermediate layer 130 and bladder 140 are shown as having an irregular, wavy configuration.

Figure 31 shows a cross-section of ball 110 taken at section line 30-30 in Figure 29 after the application of heat and pressure. As shown in Figure 31, pressurization of bladder 140 may apply pressure radially outward, as illustrated by arrows 141. This pressure applied radially outward may push reinforcing strip 177 against casing 120, which may be restricted from further expanding by the inner wall of the cavity of apparatus 500 of Figure 29. While reinforcing strip 177 is being pressed against casing 120, heat may be applied to the assembly, thereby activating a heat-activated material associated with reinforcing strip 177 and bonding reinforcing strip to casing 120. In some embodiments, the mere pressurization of bladder 140, that is, without an external restrictive apparatus, may apply pressure against reinforcing strip 177 and casing 120. By the application of heat and pressure in the manner described above, reinforcing strip 177 may be affixed to first internal surface 232 of first panel 226 and to second internal surface 234 of second panel 229, extending across seam 122.

In some embodiments, activation of heat-activated material may be performed using one or more techniques or materials disclosed in Chang et al., U.S. Patent No. 8,597,144, issued on December 3, 2013, the entire disclosure of which is incorporated herein by reference.

Figure 32 illustrates ball 110 after manufacturing has been completed. Figure 32 shows casing 120 in phantom and reinforcing strips 170 affixed to the internal surface of casing 120. Figure 32 also shows valve port 126, through which ball 110 may be inflated. It will be noted that the intermediate layer and bladder have been omitted from Figure 32 to facilitate illustration of the arrangement of reinforcing strips 170.

In some embodiments, the ball may include panels joined using other techniques prior to the affixation of reinforcing strips to the seams. For example, in some embodiments, adjacent panels may be joined using stitching. Use of stitching may facilitate manufacturing and reduce manufacturing costs as compared to welding panels together. Stitching may be performed by hand or with a machine.

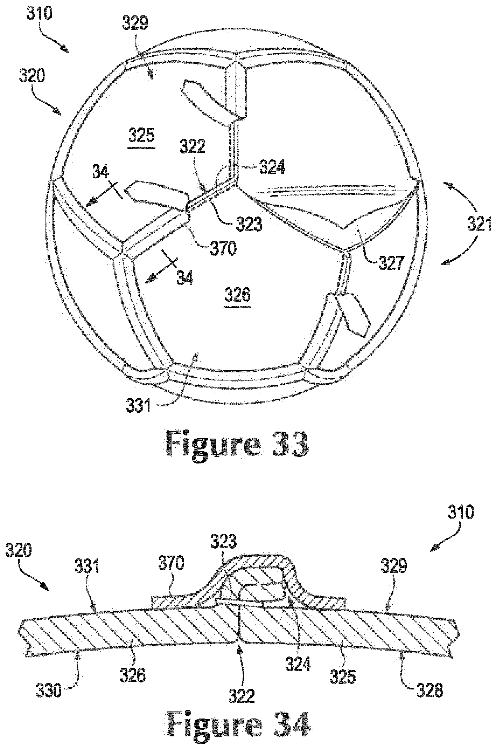

As shown in Figure 33, ball 310 may include a casing 320 formed of panels 321 joined together at seams 322 formed by stitching 323. For example, as shown in Figure 33, a first panel 325 may be joined to an adjacent second panel 326 with stitching 323, thereby forming a flange portion 324. Figure 33 illustrates casing 320 in an inside out configuration following the stitching of panels 321 to each other to form casing 320.

Once casing 320 has been assembled, a plurality of reinforcing strips may be applied to the seams. For example, as shown in Figure 33, a reinforcing strip 370 may be affixed to seam 322. The reinforcing strips may be affixed to casing 320 using any of the techniques described above. After panels 321 have been stitched together and after the reinforcing strips have been applied to the seams, the assembly may be turned right side out through an opening 327 formed between two or more panels that have not been joined.

Figure 34 is a cross-sectional view of ball 310 taken at section line 34-34 in Figure 33. As shown in Figure 34, stitching 323 may join first panel 325 to second panel 326, thus forming a flange portion 324. First panel 325 may include a first external exposed surface 328 and a first internal surface 329. Second panel 326 may include a second external exposed surface 330 and a second internal surface 331. As shown in Figure 34, reinforcing strip 370 may be affixed to first internal surface 329 of first panel 325 and second internal surface 331 of second panel 326. As further shown in Figure 34, reinforcing strip 370 may extend across seam 322, including flange portion 324. It will be noted that, in some embodiments, flange portion 324 may fold over under the pressure of reinforcing strip 370 as well as the outward pressure exerted by a pressurized bladder (not shown).

In some embodiments, reinforcing strips may be affixed to seams between ball panels that are not otherwise joined. Thus, the reinforcing strips may form the connective component between adjacent panels. As discussed above, such configurations may facilitate manufacturing, save costs, save manufacturing time, and minimize weight.

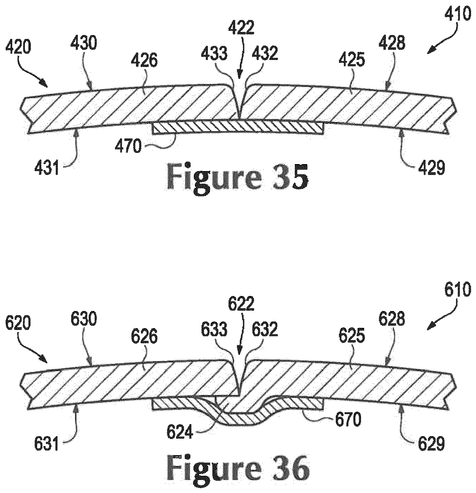

Figure 35 illustrates a cross-sectional view of a sport ball 410 including a casing 420 formed of at least a first panel 425 and a second adjacent panel 426. First panel 425 may include a first external exposed surface 428 and a first internal surface 428. Second panel 426 may include a second external exposed surface 430 and a second internal surface 431. A reinforcing strip 470 may be affixed to first internal surface 429 of first panel 425 and to second internal surface 431 of second panel 426. Reinforcing strip 470 may extend across a seam 422 between first panel 425 and second panel 426.

In some embodiments, first panel 425 may be unattached to second panel 426 independent of reinforcing strip 470. For example, first panel 425 may have a first edge 432 and second panel 426 may have a second edge 433 adjacent to and abutting first edge 432 of first panel 425. In some embodiments, first edge 432 may be unattached to second edge 433 independent of reinforcing strip 470.

In some embodiments, first edge 432 of first panel 425 may have a first cross-sectional profile and second edge 433 of second panel 426 may have a second cross-sectional profile. As shown in Figure 35, the first cross-sectional profile and the second cross-sectional profile may form an indented outer surface of casing 420 when first edge 432 of first panel 425 is abutting second edge 433 of second panel 426. This configuration may provide an appearance and performance similar to a traditional seam formed by stitching panels together. First edge 432 and second edge 433 are shown as generally rounded in Figure 35. However, other profiles may also be possible. For example, in some embodiments, first edge 432 and second edge 433 may be beveled or may have other, more sharply contoured profiles, which may be implemented to provide an indentation at seam 422.

In other embodiments, adjacent edges 432 and 433 may be pre-joined using adhesive. In some cases, the adhesive may be a temporary adhesive, for example with minimal strength, and may be used to hold first panel 425 and second panel 426 together while reinforcing strip 470 may be attached. In other embodiments, a permanent adhesive may be used to pre-join first edge 432 to second edge 433, thus forming a seam that is further reinforced by reinforcing strip 470.

In some embodiments, sport ball casing panels may be unattached independent of the reinforcing strip, but may include features that facilitate assembly of the casing. For example, casing panels may include edges having a protrusion that extends under abutting edges of adjacent panels. This may facilitate holding adjacent panels in alignment while reinforcing strips may be affixed to the seam between the adjacent panels.

Figure 36 shows a cross-sectional view of a sport ball 610 including a casing 620 formed of at least a first panel 625 and a second adjacent panel 626. First panel 625 may include a first external exposed surface 628 and a first internal surface 628. Second panel 626 may include a second external exposed surface 630 and a second internal surface 631. A reinforcing strip 670 may be affixed to first internal surface 629 of first panel 625 and to second internal surface 631 of second panel 626. Reinforcing strip 670 may extend across a seam 622 between first panel 625 and second panel 626.

In some embodiments, first panel 625 may be unattached to second panel 626 independent of reinforcing strip 670. For example, first panel 625 may have a first edge 632 and second panel 626 may have a second edge 633 adjacent to and abutting first edge 632 of first panel 625. In some embodiments, first edge 632 may be unattached to second edge 633 independent of reinforcing strip 670.

In addition, first edge 632 may include a protrusion 624 that may extend outward from first edge 632 and may be located under second edge 633 to facilitate alignment of first panel 625 and second panel 626 during assembly. In addition, the overlapping configuration provided by protrusion 624 underlying second edge 633 of second panel 626 may provide additional reinforcement for seam 622.

As discussed above, first edge 632 and second edge 633 may be profiled such that the abutting edges form an indentation at seam 622. As also discussed above, in some embodiments, temporary adhesive may be used to join first edge 632 to second edge 633 temporarily during assembly, including during the affixation of reinforcing strip 670. Further, in some embodiments, permanent adhesive may be used to join first edge 632 to second edge 633 prior to affixing reinforcing strip 670 to provide additional reinforcement of seam 622.

The reinforcing strips may be applied to the casing of the sport ball using any suitable process. In some cases, the process may be performed completely manually. In other cases, the process may be fully automated. In still other cases, the process may be partially automated, and thus, some aspects of the method may be automated, while other aspects may be performed manually.

Generally, exemplary ball handling steps of the reinforcing strip application process when using an automated machine may include a) inserting the ball casing into the machine, b) orienting the ball casing such that a seam is positioned for application of a reinforcing strip, c) supporting the ball casing while applying a reinforcing strip to the seam, d) reorienting the ball casing for application of another strip to another seam, and e) removing the ball casing from the machine. Each of these steps may be performed manually or automatically. Accordingly, exemplary methods of applying the reinforcing strips may include various combinations of manual and automated steps.

For example, in some embodiments, the ball casing may be supported and oriented using an automated machine, and the strips may be manually applied. That is, the ball casing may be held in a fixture while reinforcing strips are manually applied. The fixture may be reoriented (manually or automatically) after application of one or more strips to facilitate application of additional strips. In other embodiments, the ball casing may be manually supported and manipulated and the reinforcing strips may be applied by an automated machine. Automation of ball assembly process steps may reduce manufacturing costs, and expedite the manufacturing process. In addition, automated execution of process steps may increase accuracy and consistency in performance of the process steps.

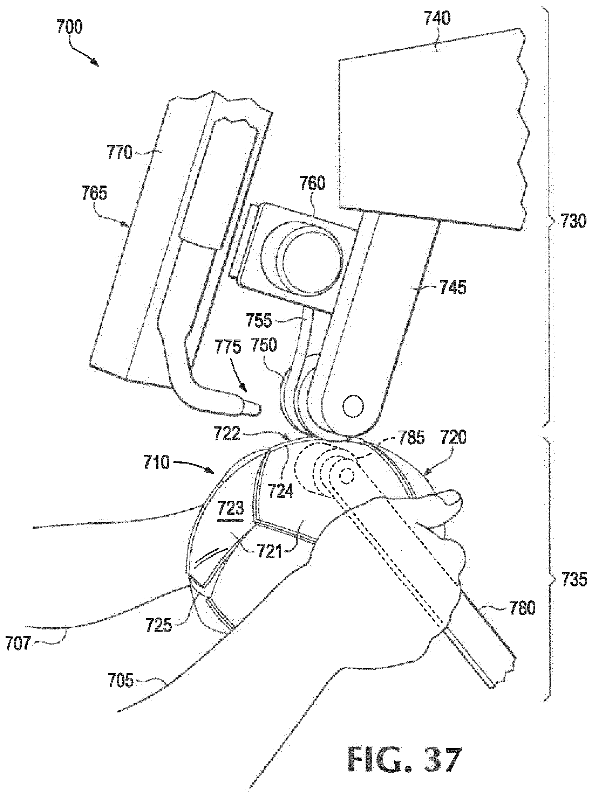

Figures 37-42 illustrate an exemplary method for applying reinforcing strips to a sport ball casing. As shown in Figure 37, the exemplary method may include a partially manual and partially automated process of applying reinforcing strips to a sport ball casing. In the process shown in Figure 37, the ball is manipulated partially manually, while the application of the reinforcing strips is performed by an automated machine.

Figure 37 shows a sport ball 710 including a casing 720. Casing 720 may have the same or similar features as casings in other embodiments discussed above. For example, casing 720 may be formed of a plurality of panels 721, which may be joined at adjacent edges to form seams 722. In some embodiments, seams 722 may include flange portions 724. Flange portions 724 may be formed and configured similarly to other embodiments discussed above.

As also shown in Figure 37, casing 720 may be formed inside out. Therefore, the outward-facing surface in Figure 37 may be an inner casing surface 723, which faces inward once casing 720 is turned right side out during the manufacturing process. Similar to other embodiments discussed above, casing 720 may be turned right side out through an opening 725, which is formed between adjacent panels that have not been joined together yet.

At least some aspects of the reinforcing strip application process may be automated. For example, Figure 37 shows a reinforcing strip application apparatus 700 for applying reinforcing strip material 755 to seams 722 of sports ball 710. Various operations performed by apparatus 700 may be automated. In some cases, various mechanized operations may occur automatically. In other cases, certain mechanized operations may be performed in response to a user input. For example, the user may push a button or flip a switch to trigger an operation performed by apparatus 700.

Although some aspects of the reinforcing strip application process may be automated, at least some aspects of the process may be performed manually. For example, in some embodiments, a user may provide at least a portion of the support and manipulation of casing 720 of ball 710 within apparatus 700. As shown in Figure 37, a first arm 705 of a user and a second arm 707 of a user of apparatus 700 may manipulate casing 720 of ball 710 while reinforcing strips are applied to inner casing surface 723 by apparatus 700. In some embodiments, the user may position casing 720 within apparatus 700. In addition, in some embodiments, the user may orient casing 720 by aligning seams 722 with reinforcing strip material 755. In addition, in some embodiments, the user may feed casing 720 through device 710 as reinforcing strip material 755 is applied to seam 722. Further, the user may manually reorient casing 720 for application of reinforcing strip material 755 to each seam, or to a plurality of seams. It will be noted that one or more of these process operations may be automated in some cases.

Apparatus 700 may include an upper assembly 730. Upper assembly 730 may include a cross member 740. Cross member 740 may be configured to support other components of apparatus 700. For example, apparatus 700 may include a support arm 745. In some embodiments, support arm 745 may be attached to cross member 740. In some cases, support arm 745 may be movably attached to cross member 740.

Support arm 745 may be configured to support one or more additional components of apparatus 700. For example, upper assembly 730 may include a wheel 750 and a dispensing device 760. Further, upper assembly 730 may also include a heating device 765. Heating device 765 may include a body portion 770 configured to generate heat, and a tip 775 configured to apply heat to reinforcing strip material 755. One or more of these components may be attached to support arm 745. In some embodiments, one or more of these components may be fixedly attached to support arm 745. In some embodiments, one or more of these components may be movably attached to support arm 745.

Apparatus 700 may also include a lower assembly 735. In some embodiments, lower assembly 735 may include a support arm 780. In some embodiments, lower assembly 735 may also include a roller 785 supported by support arm 780. Roller 785 may be configured to cooperate with wheel 750 of upper assembly 730 to press the reinforcing strip material 755 against casing 720 during the reinforcing strip application process.

Upper assembly 730 may cooperate with lower assembly 735 to apply reinforcing strips to casing 720. Casing 720 may be positioned between wheel 750 and roller 785. Wheel 750 may be configured to guide reinforcing strip material 755 as the material is dispensed from dispensing device 760. Wheel 750 may be actuated to press casing 720 against roller 785, thereby pressing reinforcing strip material 755 onto surface 723 of casing 720.

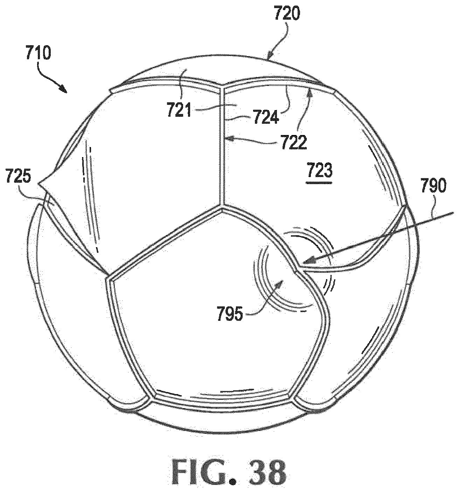

Figure 38 illustrates the initial steps of collapsing casing 720 of ball 710 into a bowl-shaped configuration. After forming casing 720 inside out, as discussed above, a first side of casing 720 may be pressed radially inward to form the first side of casing 720 of ball 710 to be concave. For example, as shown in Figure 38, casing 720 may be pressed in the direction of arrow 790, thereby causing a depression 795 on one side of casing 720.

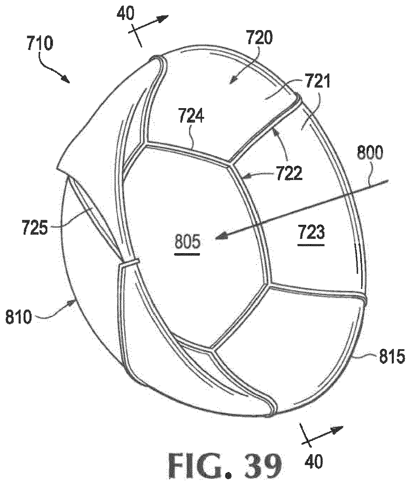

Figure 39 illustrates casing 720 fully collapsed into a bowl-shaped configuration. After applying pressure in the direction of arrow 800, a first side of casing 720 may be formed into a concave side 805. The opposite side of casing 720 may remain as a convex side 810. Thus, casing 720 may be formed into a bowl-shaped configuration, including a rim 815 at the periphery of the bowl shape.

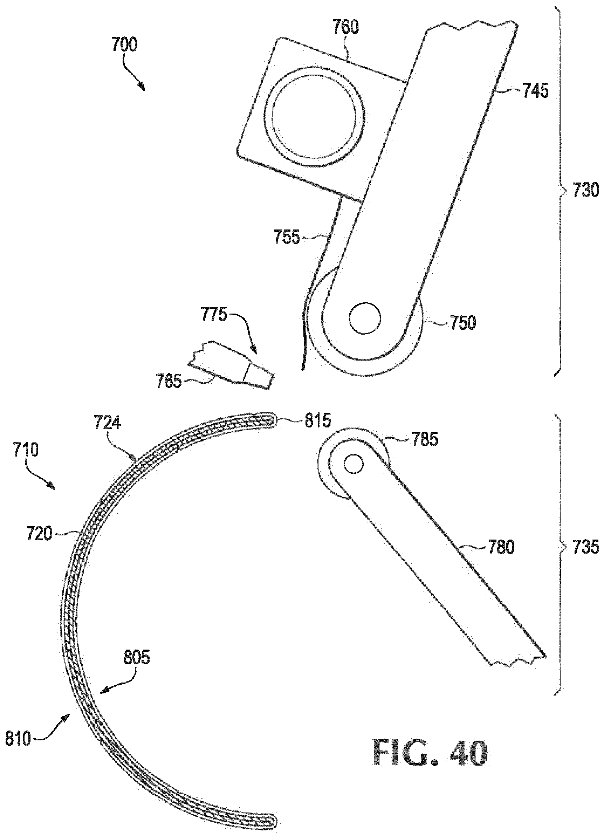

Figure 40 illustrates a collapsed casing 720 prepared to be inserted into reinforcing strip applying apparatus 700. For purposes of illustration, components of apparatus 700 are shown in a side view and casing 720 is shown in a cross-sectional view taken at section line 40-40 in Figure 39. As shown in Figure 40, components of upper assembly 730, including support arm 745 and wheel 750, may be raised to place apparatus 700 into an open condition forming an open space between wheel 750 and roller 785 of lower assembly 735. This may permit the insertion of casing 720 between wheel 750 and roller 785. Apparatus 700 may be placed in this open condition to facilitate insertion of casing 720, orientation and reorientation of casing 720, as well as removal of casing 720 from apparatus 700.

An exemplary method of applying reinforcing strips to the ball includes placing the ball casing, in the bowl-shaped configuration, between a roller and a wheel. In addition, the method may include applying compressive pressure between the roller and the wheel. Further, the method may include feeding the reinforcing strips between the wheel and the casing surface as the wheel rolls over the casing surface to apply the reinforcing strips to the casing surface.

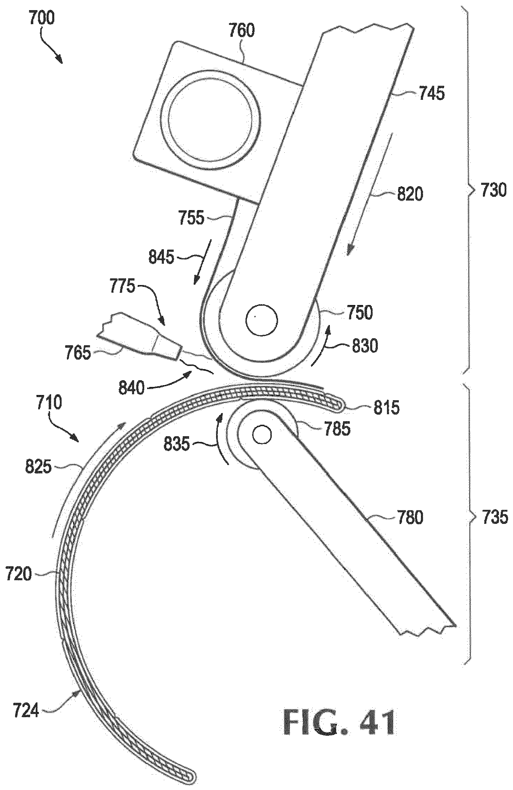

Figure 41 illustrates casing 720 of ball 710 inserted into apparatus 700. In addition, Figure 41 illustrates a continuous length of reinforcing strip material 755 being applied to casing 720. As shown in Figure 41 by an arrow 820, support arm 745 may move generally downward to clamp casing 720 between wheel 750 and roller 785. It will be noted that in some embodiments, support arm 745 may move in a non-vertical direction, as indicated by arrow 820. In other embodiments, support arm 745 may move in a substantially vertical direction. In some embodiments, the movement of support arm 745 may be substantially linear. In other embodiments, the movement of support arm 745 may be more complicated. For example, support arm 745 may be configured to make multiple movements in different directions. In some embodiments, all of these movements may be substantially linear. In other embodiments, at least some of these movements may be non-linear.

In some embodiments, support arm 780 may remain stationary, thus allowing roller 785 to operate as a rotating anvil against which wheel 750 may be pressed. In other embodiments, support arm 780 may also be movable. For example, in some embodiments, actuation of support arm 780 may contribute to the opening and closing of the space between roller 785 and wheel 750, and may also effectuate at least part of the application of pressure between roller 785 and wheel 750.

As shown in Figure 41, casing 720 of ball 710 may be moved generally in the direction of arrow 825 between wheel 750 and roller 785. As casing 720 is passed between wheel 750 and roller 785, wheel 750 may rotate in the direction of arrow 830 and roller 785 may rotate in the direction of arrow 835, as shown in Figure 41.

In some embodiments, the movement of casing 720 in the direction of arrow 825 may be performed manually. In such embodiments, wheel 750 and roller 785 may be passive, and thus, may freely rotate as casing 720 is advanced manually through apparatus 700. In other embodiments, this movement of casing 720 may be automated. For example, in some cases, casing 720 may be advanced in the direction of arrow 825 by a separate automated machine (not shown). In some embodiments, casing 720 may be advanced in the direction of arrow 825 by apparatus 700. For example, in some embodiments, roller 785 may be powered, and thus, may be configured to draw casing 720 through apparatus 700 in the direction of arrow 825. Additionally, or alternatively, in some embodiments, roller 785 may be powered to draw casing 720 through apparatus 700 in the direction of arrow 825.

In some embodiments, the rolling of wheel 750 may be linked, mechanically or electronically, to the dispensing device 760 such that, as wheel 750 rolls over casing 720, dispensing device 760 dispenses the corresponding length of reinforcing strip material 755 in a direction indicated by arrow 845. In some embodiments, dispensing device 760 may operate passively, allowing corresponding lengths of reinforcing strip material 755 to be drawn from dispensing device 760 as wheel 750 rotates. In other embodiments, dispensing device 760 may operate actively, dispensing strip material 755 at a rate that corresponds with the rotation of wheel 750. In still other embodiments, dispensing device 760 may operate passively during some steps and actively in other steps. For example, dispensing device 760 may be configured to actively dispense a length of reinforcing strip material 755 to initiate the process of applying a given strip. Once the end of the strip material 755 is pressed between wheel 750 and casing 720, dispensing device 760 may passively release additional length of strip material 755 as wheel 750 applies the material to casing 720. When apparatus 700 proceeds to begin applying a second strip, dispensing device 760 may actively dispense another length of reinforcing strip material 755.

In some embodiments, reinforcing strip material 755 may include a pre-applied adhesive material. In some embodiments, the adhesive material may be a pressure sensitive adhesive. In such embodiments, the application of pressure to the reinforcing strip material 755 between wheel 750 and roller 785 may activate the pressure sensitive adhesive.

In some embodiments the reinforcing strip material 755 may include a pre-applied, heat-activated adhesive. In such embodiments, heat may be applied to reinforcing strip material 755 in order to affix the strips to casing 720. For example, as shown in Figure 41, heating device 765 may be configured to apply heat to reinforcing strip material 755 as reinforcing strip material 755 is being applied to casing 720. Body portion 770 of heating device 765 may include components configured to generate heat. Tip 775 of heating device 765 may be configured to apply heat (for example, heat generated in body portion 770), as indicated by heat waves 840 in Figure 41.

Heating device 765 may be configured to apply heat in any suitable manner. For example, the application of heat may expose the reinforcing strips to at least one of radiation heating, conduction heating, and convection heating. For example, in some embodiments, heating device 765 may apply heat using radiation (for example, microwaves). In some embodiments, heating device 765 may apply heat using conduction, for example, by simply placing a heated tip 775 proximate to reinforcing strip material 755. That is, the heat is conducted from tip 775 through the air to the reinforcing strip material 755. In some embodiments, heating device 765 may utilize convection, for example by blowing hot air onto reinforcing strip material 755. As shown in Figure 41, the heat may be applied to a first side of each reinforcing strip (for example, a first side of the strip material having the pre-applied heat-activated adhesive material). The first side of each reinforcing strip may then be attached to casing 720.

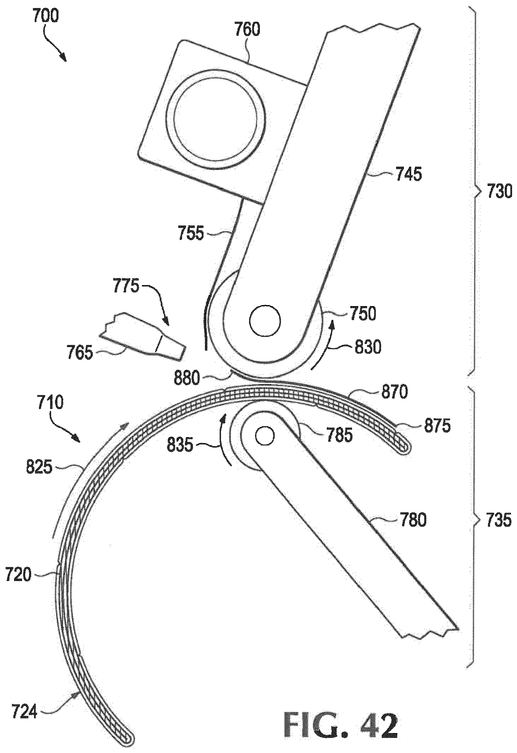

Figure 42 illustrates casing 720 of ball 710 after further insertion into apparatus 700. As shown in Figure 42, after wheel 750 has rolled a distance across casing 720 approaching the length of a seam, reinforcing strip material 755 may be cut to a predetermined length corresponding with the length of the seam. Thus, the continuous length of reinforcing strip material 755 may be cut into a reinforcing strip 870 having a first end 875 and a second end 880. Apparatus 700 may include a cutting device (not shown) that performs this cut automatically. Accordingly, reinforcing strips 870 may be formed by feeding a continuous length of reinforcing strip material 755 from dispensing device 760 and cutting predetermined lengths of reinforcing strip material as the continuous length of reinforcing strip material 755 is being applied to casing 720. Once reinforcing strip 870 is completely applied to casing 720 over the seam, casing 720 may be reoriented for application of another strip to another seam of casing 720.

Although, Apparatus 700 is shown in Figs. 37 and 40-42 being used to apply reinforcing strips to a pre-assembled casing, in some embodiments, apparatus 700 may be used to assemble the casing. For example, in some embodiments, apparatus 700 may be used to join the casing panels to one another, one seam at a time, by the application of individual reinforcing strips. In such assembly methods, the edges of adjacent panels may be unattached to one another independent of the reinforcing strip. Thus, for some or all of the seams of a ball, the reinforcing strips may be the only attachment between adjacent panels. Such constructions may save weight and costs by eliminating stitching, adhesives, and welding steps from the assembly process.

The invention is disclosed above and in the accompanying figures with reference to a variety of configurations. The purpose served by the disclosure, however, is to provide an example of the various features and concepts related to the invention, not to limit the scope of the invention. One skilled in the relevant art will recognize that numerous variations and modifications may be made to the configurations described above without departing from the scope of the present invention, as defined by the appended claims.

## Claims

1. A sport ball (10; 610) comprising:
a casing (20; 620) having a plurality of panels (21; 625, 626) that form an external exposed surface of the sport ball (10; 610), wherein adjacent ones of the panels (21; 625, 626) abut one another at a plurality of seams (22; 622), wherein each of the plurality of seams (22; 622) includes
a first one of the panels (21; 625) having a first internal surface (629) and a first edge (29; 632), and
a second one of the panels (21; 626) having a second internal surface (631) and a second edge (29; 633); and
a reinforcing strip (70; 170) affixed to the first and second internal surfaces (629, 631) with a thermal bond, wherein the reinforcing strip (70; 170) extends across an interface between the first one of the panels (21; 625) and the second one of the panels (21; 626),
**characterized in that**
one of edges (29; 632) defines a projection (28; 624), and
the projection (28; 624) extends outward and under the other edge (29; 632).

2. The sport ball of claim 1, wherein the sport ball (10; 610) further comprises:
a bladder (140) disposed within the casing (20; 620) and configured to retain a pressurized gas; and
an intermediate layer (130) disposed between the casing (20; 620) and the bladder (140), wherein the intermediate layer (130) has an elasticity that is less than an elasticity of the casing (20; 620).

3. The sport ball (10; 610) of claim 1, wherein the first edge (29; 632) and the second edge (29; 633) have rounded configurations.

4. The sport ball (10; 610) of claim 1, wherein the first edge (29; 632) and the second edge (29; 633) have squared configurations.

5. The sport ball (10; 610) of claim 1, wherein the reinforcing strip (70; 170) is formed from a thermally activated thermoplastic polymer material, and/or
wherein the reinforcing strip (70; 170) is affixed to the first panel (21; 625) and to the second panel (21; 626) with an adhesive material.

6. A method of manufacturing a sport ball (710), the method comprising:
providing a plurality of casing panels (721);
abutting edges of adjacent ones of the plurality of casing panels (721) to thereby form a casing, the edges abutting at a plurality of panel interfaces forming seams (722) between adjacent ones of the plurality of casing panels (721), wherein
each of the seams (722) includes:
a first one of the plurality of casing panels (21; 625) having a first internal surface (629) and a first edge (29; 632); and
a second one of the plurality of casing panels (21; 626) having a second internal surface (631) and a second edge (29; 633), and
one of edges (29; 632) defines a projection (28; 624) extending outward and under the other edge (29; 632);
affixing a plurality of reinforcing strips (870) to the casing at a substantial majority of the plurality of panel interfaces, the affixing including applying each of the plurality of reinforcing strips (870) to surfaces (629, 631) of adjacent ones of the plurality of casing panels (721) such that each of the plurality of reinforcing strips (870) extends across the interface between the abutting edges (29; 632; 633) of the adjacent ones of the plurality of casing panels (721); and
orienting the casing to have a first external exposed casing surface and a second internal casing surface (723), the plurality of reinforcing strips (870) being affixed to the second internal casing surface (723).

7. The method of claim 6, wherein welding includes forming the casing (720) with the second internal casing surface (723) oriented facing outward so the casing (720) is inside-out; and further including turning the casing (720) right side out after affixing the plurality of reinforcing strips (870) to the second internal casing surface (723).

8. The method of claim 7, wherein turning the casing right side out is further defined as turning the casing right side out through an opening formed between the first edge (29; 632) and the second edge (29; 633); and further including affixing one of the plurality of reinforcing strips (870) to one of the plurality of seams (22; 622) formed by abutting the first edge (29; 632) and the second edge (29; 633).

9. The method of claim 7, wherein turning the casing right side out is further defined as turning the casing right side out through an opening (725) formed between the first edge (29; 632) and the second edge (29; 633); and further including welding the first edge (29; 632) to the second edge (29; 633), and/or
wherein turning the casing right side out is further defined as turning the casing right side out through an opening (725) formed between the first edge (29; 632) and the second edge (29; 633); and further including: forming the first edge (29; 632) to have the projection (28; 624) that extends outward from the first edge (29; 632); locating the projection (28; 624) under the second edge (29; 633); and joining the first edge (29; 632) and the second edge (29; 633) to each other.

10. The method of claim 7, further including, after forming the casing (720) inside out, pressing a first side of the casing (720) radially inward so that the first side is concave (805), thereby forming a substantially bowl-shaped configuration.

11. The method of claim 10, further including placing the casing (720) between a first roller (785) and a second roller (750); applying compressive pressure between the first roller (785) and the second roller (750); and feeding the plurality of reinforcing strips (870) between the second roller (750) and the second internal casing surface (723) as the second roller (750) rolls over the second internal casing surface (723) to apply the plurality of reinforcing strips (870) to the second internal casing surface (723).

## Patentansprüche

1. Ein Sportball (10; 610), der Folgendes umfasst:
eine Hülle (20; 620) mit einer Vielzahl von Platten (21; 625, 626), die eine äußere freiliegende Oberfläche des Sportballs (10; 610) bilden, wobei benachbarte Platten der Platten (21; 625, 626) an einer Vielzahl von Nähten (22; 622) aneinanderstoßen, wobei jede der Vielzahl von Nähten (22; 622) Folgendes beinhaltet:
eine erste der Platten (21; 625) mit einer ersten Innenfläche (629) und einer ersten Kante (29; 632), und
eine zweite der Platten (21; 626) mit einer zweiten Innenfläche (631) und einer zweiten Kante (29; 633); und
eine zweite Kante (29; 633); und
einen Verstärkungsstreifen (70; 170), der an den ersten und zweiten Innenflächen (629, 631) mit einer thermischen Verbindung befestigt ist, wobei sich der Verstärkungsstreifen (70; 170) über eine Grenzfläche zwischen der ersten der Platten (21; 625) und der zweiten der Platten (21; 626) erstreckt,
**dadurch gekennzeichnet, dass**
eine der Kanten (29; 632) einen Vorsprung (28; 624) definiert, und **dass**
der Vorsprung (28; 624) sich nach außen und unter den anderen Rand (29; 632) erstreckt.

2. Der Sportball nach Anspruch 1, wobei der Sportball (10; 610) ferner Folgendes umfasst:
eine Blase (140), die innerhalb der Hülle (20; 620) angeordnet und so konfiguriert ist, dass sie ein unter Druck stehendes Gas hält; und
eine Zwischenschicht (130), die zwischen der Hülle (20; 620) und der Blase (140) angeordnet ist, wobei die Zwischenschicht (130) eine Elastizität aufweist, die geringer ist als die Elastizität der Hülle (20; 620).

3. Der Sportball (10; 610) nach Anspruch 1, wobei die erste Kante (29; 632) und die zweite Kante (29; 633) eine abgerundete Konfiguration aufweisen.

4. Der Sportball (10; 610) nach Anspruch 1, wobei die erste Kante (29; 632) und die zweite Kante (29; 633) eine rechteckige (*squared*) Konfiguration aufweisen.

5. Der Sportball (10; 610) nach Anspruch 1, wobei der Verstärkungsstreifen (70; 170) aus einem thermisch aktivierten thermoplastischen Polymermaterial gebildet ist, und/oder
wobei der Verstärkungsstreifen (70; 170) an der ersten Platte (21; 625) und an der zweiten Platte (21; 626) mit einem Klebematerial befestigt ist.

6. Ein Verfahren zur Herstellung eines Sportballs (710), wobei das Verfahren Folgendes umfasst:
Bereitstellen einer Vielzahl von Hüllen-Platten (721);
Aneinanderstoßen von Kanten von benachbarten Platten der Vielzahl von Hüllen-Platten (721), um dadurch eine Hülle zu bilden, wobei die Kanten an einer Vielzahl von Platten-Schnittstellen aneinanderstoßen und Nähte (722) zwischen benachbarten der Vielzahl von Hüllen-Platten (721) bilden, wobei
jede der Nähte (722) Folgendes beinhaltet:
eine erste von der Vielzahl von Hüllen-Platten (21; 625) mit einer ersten Innenfläche (629) und einer ersten Kante (29; 632); und
eine zweite von der Vielzahl von Hüllen-Platten (21; 626) mit einer zweiten Innenfläche (631) und einer zweiten Kante (29; 633), und wobei
eine der Kanten (29; 632) einen Vorsprung (28; 624) definiert, der sich nach außen und unter der anderen Kante (29; 632) erstreckt;
Befestigen einer Vielzahl von Verstärkungsstreifen (870) an der Hülle an einer wesentlichen Mehrheit der Vielzahl von Platten-Grenzflächen, wobei das Befestigen das Anbringen jedes der Vielzahl von Verstärkungsstreifen (870) an Oberflächen (629, 631) von benachbarten Platten der Vielzahl von Hüllen-Platten (721) beinhaltet, sodass sich jeder der Vielzahl von Verstärkungsstreifen (870) über die Grenzfläche zwischen den anstoßenden Kanten (29; 632; 633) der benachbarten Platten der Vielzahl von Hüllen-Platten (721) erstreckt; und
Ausrichten der Hülle, sodass sie eine erste äußere freiliegende Hüllen-Oberfläche und eine zweite innere Hüllen-Oberfläche (723) aufweist, wobei die Vielzahl von Verstärkungsstreifen (870) an der zweiten inneren Hüllen-Oberfläche (723) befestigt ist.

7. Das Verfahren nach Anspruch 6, wobei das Schweißen beinhaltet, dass die Hülle (720) auf eine Weise geformt wird, dass die zweite innere Hüllen-Oberfläche (723) nach außen gerichtet ist, sodass die Hülle (720) nach außen gekehrt ist;
und ferner Folgendes beinhaltet: nach außen Drehen der Hülle (720) nach dem Befestigen der Vielzahl von Verstärkungsstreifen (870) an der zweiten inneren Hüllen-Oberfläche (723).

8. Das Verfahren nach Anspruch 7, wobei das nach außen Drehen der Hülle ferner definiert ist als nach außen Drehen der Hülle durch eine Öffnung, die zwischen der ersten Kante (29; 632) und der zweiten Kante (29; 633) gebildet ist; und ferner Folgendes beinhaltet: Befestigen eines der Vielzahl von Verstärkungsstreifen (870) an einer der Vielzahl von Nähten (22; 622), die gebildet ist durch Anstoßen der ersten Kante (29; 632) und der zweiten Kante (29; 633).

9. Das Verfahren nach Anspruch 7, wobei das nach außen Drehen der Hülle ferner definiert ist als nach außen Drehen der Hülle durch eine Öffnung (725), die zwischen der ersten Kante (29; 632) und der zweiten Kante (29; 633) ausgebildet ist; und ferner Folgendes beinhaltet: Verschweißen der ersten Kante (29; 632) mit der zweiten Kante (29; 633), und/oder
wobei das nach außen Drehen der Hülle ferner definiert ist als nach außen Drehen der Hülle durch eine Öffnung (725), die zwischen der ersten Kante (29; 632) und der zweiten Kante (29; 633) ausgebildet ist; und ferner Folgendes beinhaltet: Ausbilden der ersten Kante (29; 632), sodass sie den Vorsprung (28; 624) aufweist, der sich von der ersten Kante (29; 632) nach außen erstreckt; Anordnen des Vorsprungs (28; 624) unter der zweiten Kante (29; 633); und Verbinden der ersten Kante (29; 632) und der zweiten Kante (29; 633) miteinander.

10. Das Verfahren nach Anspruch 7, das ferner, nach dem Ausbilden der nach außen gekehrten Hülle (720), Folgendes beinhaltet: radial nach innen Drücken eine erste Seite der Hülle (720), sodass die erste Seite konkav (805) ist, wodurch eine im Wesentlichen schalenförmige Konfiguration gebildet wird.

11. Das Verfahren nach Anspruch 10, das ferner Folgendes beinhaltet: Anordnen der Hülle (720) zwischen einer ersten Walze (785) und einer zweiten Walze (750); Ausüben eines Drucks zwischen der ersten Walze (785) und der zweiten Walze (750); und Zuführen der Vielzahl von Verstärkungsstreifen (870) zwischen der zweiten Walze (750) und der zweiten inneren Hüllen-Oberfläche (723), wenn die zweite Walze (750) über die zweite innere Hüllen-Oberfläche (723) rollt, um die Vielzahl von Verstärkungsstreifen (870) an der zweiten inneren Hüllen-Oberfläche (723) anzubringen.

## Revendications

1. Un ballon de sport (10 ; 610) comprenant :
une enveloppe (20 ; 620) présentant une pluralité de panneaux (21 ; 625, 626) qui forment une surface externe exposée du ballon de sport (10 ; 610), sachant que les panneaux adjacents (21 ; 625, 626) sont placés en about l'un par rapport à l'autre au niveau d'une pluralité de coutures (22 ; 622), sachant que chacune de la pluralité de coutures (22 ; 622) inclut
un premier des panneaux (21 ; 625) présentant une première surface interne (629) et un premier bord (29 ; 632), et
un deuxième des panneaux (21 ; 626) présentant une deuxième surface interne (631) et un deuxième bord (29 ; 633) ; et
un deuxième bord (29 ; 633) ; et
une bande de renforcement (70 ; 170) fixée aux surfaces internes première et deuxième (629, 631) par une liaison thermique, sachant que la bande de renforcement (70 ; 170) s'étend sur une interface entre le premier des panneaux (21 ; 625) et le deuxième des panneaux (21 ; 626),
**caractérisé en ce que**
l'un des bords (29 ; 632) définit une saillie (28 ; 624), et **que**
la saillie (28 ; 624) s'étend vers l'extérieur et au-dessous de l'autre bord (29 ; 632).

2. Le ballon de sport d'après la revendication 1, sachant que le ballon de sport (10 ; 610) comprend en outre :
une vessie (140) disposée à l'intérieur de l'enveloppe (20 ; 620) et configurée pour retenir un gaz sous pression ; et
une couche intermédiaire (130) disposée entre l'enveloppe (20 ; 620) et la vessie (140), sachant que la couche intermédiaire (130) présente une élasticité qui est inférieure à une élasticité de l'enveloppe (20 ; 620).

3. Le ballon de sport (10 ; 610) d'après la revendication 1, sachant que le premier bord (29 ; 632) et le deuxième bord (29 ; 633) ont des configurations arrondies.

4. Le ballon de sport (10 ; 610) d'après la revendication 1, sachant que le premier bord (29 ; 632) et le deuxième bord (29 ; 633) ont des configurations carrées.

5. Le ballon de sport (10 ; 610) d'après la revendication 1, sachant que la bande de renforcement (70 ; 170) est constituée d'un matériau polymère thermoplastique activé thermiquement, et/ou
sachant que la bande de renforcement (70 ; 170) est fixée au premier panneau (21 ; 625) et au deuxième panneau (21 ; 626) avec un matériau adhésif.

6. Un procédé de fabrication d'un ballon de sport (710), le procédé comprenant le fait de :
fournir une pluralité de panneaux d'enveloppe (721) ;
mettre en butée des bords de panneaux adjacents de la pluralité de panneaux d'enveloppe (721) pour former ainsi une enveloppe, les bords venant en butée au niveau d'une pluralité d'interfaces de panneaux formant des coutures (722) entre des panneaux adjacents de la pluralité de panneaux d'enveloppe (721), sachant que
chacune des coutures (722) inclut :
un premier panneau de la pluralité de panneaux d'enveloppe (21 ; 625) présentant une première surface interne (629) et un premier bord (29 ; 632) ; et
un deuxième panneau de la pluralité de panneaux d'enveloppe (21 ; 626) présentant une deuxième surface interne (631) et un deuxième bord (29 ; 633), et que
l'un des bords (29 ; 632) définit une saillie (28 ; 624) s'étendant vers l'extérieur et au-dessous de l'autre bord (29 ; 632) ;
fixer une pluralité de bandes de renforcement (870) à l'enveloppe au niveau d'une majorité substantielle de la pluralité d'interfaces de panneaux, la fixation incluant l'application de chacune de la pluralité de bandes de renforcement (870) sur des surfaces (629, 631) de panneaux adjacents de la pluralité de panneaux d'enveloppe (721) de manière que chaque bande de renforcement de la pluralité de bandes de renforcement (870) s'étende en traversant (*across*) l'interface entre les bords en butée (29 ; 632 ; 633) des panneaux adjacents de la pluralité de panneaux d'enveloppe (721) ; et de
orienter l'enveloppe pour avoir une première surface d'enveloppe externe exposée et une deuxième surface interne d'enveloppe (723), la pluralité de bandes de renforcement (870) étant fixée à la deuxième surface interne d'enveloppe (723).

7. Le procédé d'après la revendication 6, sachant que le soudage inclut la formation de l'enveloppe (720) avec la deuxième surface interne d'enveloppe (723) orientée vers l'extérieur, de manière que l'enveloppe (720) soit à l'envers ;
et incluant en outre le retournement à l'envers de l'enveloppe (720) après la fixation de la pluralité de bandes de renforcement (870) à la deuxième surface interne d'enveloppe (723).

8. Le procédé d'après la revendication 7, sachant que le retournement à l'envers de l'enveloppe est en outre défini comme le retournement à l'envers de l'enveloppe à travers une ouverture formée entre le premier bord (29 ; 632) et le deuxième bord (29 ; 633) ; et incluant en outre la fixation de l'une de la pluralité de bandes de renforcement (870) à l'une de la pluralité de coutures (22 ; 622) formées par la mise en butée du premier bord (29 ; 632) et du deuxième bord (29 ; 633).

9. Le procédé d'après la revendication 7, sachant que le retournement de l'enveloppe à l'envers est en outre défini comme le retournement de l'enveloppe à l'envers à travers une ouverture (725) formée entre le premier bord (29 ; 632) et le deuxième bord (29 ; 633) ; et incluant en outre le soudage du premier bord (29 ; 632) au deuxième bord (29 ; 633), et/ou
sachant que le retournement de l'enveloppe à l'envers est en outre défini comme le retournement de l'enveloppe à l'envers à travers une ouverture (725) formée entre le premier bord (29 ; 632) et le deuxième bord (29 ; 633) ; et incluant en outre le fait de : former le premier bord (29 ; 632) de manière qu'il présente la saillie (28 ; 624) qui s'étend vers l'extérieur à partir du premier bord (29 ; 632) ; positionner la saillie (28 ; 624) au-dessous du deuxième bord (29 ; 633) ; et de joindre le premier bord (29 ; 632) et le deuxième bord (29 ; 633) l'un à l'autre.

10. Le procédé d'après la revendication 7, incluant en outre, après avoir formé l'enveloppe (720) à l'envers, le fait de presser un premier côté de l'enveloppe (720) radialement vers l'intérieur de manière que le premier côté soit concave (805), formant ainsi une configuration essentiellement en forme de bol.

11. Le procédé d'après la revendication 10, incluant en outre le fait de : placer l'enveloppe (720) entre un premier rouleau (785) et un deuxième rouleau (750) ; appliquer une pression de compression entre le premier rouleau (785) et le deuxième rouleau (750) ; et d'alimenter la pluralité de bandes de renforcement (870) entre le deuxième rouleau (750) et la deuxième surface interne d'enveloppe (723) lorsque le deuxième rouleau (750) roule sur la deuxième surface interne d'enveloppe (723) pour appliquer la pluralité de bandes de renforcement (870) sur la deuxième surface interne d'enveloppe (723).
